# EUROPÄISCHE PATENTSCHRIFT

(11) **EP 0 524 149 B1**
(45) Veröffentlichungstag und Bekanntmachung des Hinweises auf die Patenterteilung: **21.10.1998**
(21) Anmeldenummer: 92810528.7
(22) Anmeldetag: 10.07.1992
(51) Int. Cl.: C09B 31/057, C09B 31/043, C09B 31/062, C09B 43/28, C09B 67/22, D06P 3/24, C09B 31/047, C09B 67/00, C09B 31/02

(54) **Azofarbstoffe, Verfahren zu deren Herstellung und deren Verwendung**
Azo dyes, method for their preparation and their use
Colorants azoiques, procédé pour leur préparation et leur utilisation

(30) Priorität: 19.07.1991 CH 2163/91
(43) Veröffentlichungstag der Anmeldung: 20.01.1993
(73) Patentinhaber: Ciba Specialty Chemicals Holding Inc., 4057 Basel (CH)
(72) Erfinder: Mäusezahl, Dieter, Dr., CH-4105 Biel-Benken (CH); Lehmann, Urs, Dr., CH-4056 Basel (CH)

(56) Entgegenhaltungen:
- EP-A- 0 066 781
- EP-A- 0 141 063
- EP-A- 0 356 080
- DE-A- 3 724 037
- FR-A- 2 070 752
- FR-A- 2 079 390
- GB-A- 1 265 428
- GB-A- 1 322 704

## Beschreibung

Die vorliegende Erfindung betrifft neue Azofarbstoffe, Verfahren zu deren Herstellung und Verwendung dieser Farbstoffe zum Färben und Bedrucken von Fasermaterialien, insbesondere textilen Fasermaterialien.

Gegenstand der vorliegenden Erfindung sind Azofarbstoffe der Formel 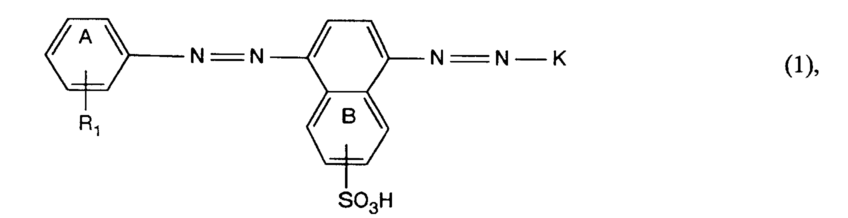 worin R₁ einen Rest der Formel -NH-CO-R₂,
R₂ gegebenenfalls durch Halogen, Hydroxy oder C₁-C₄-Alkoxy substituiertes C₁-C₄-Alkyl,
K einen Rest der Formel 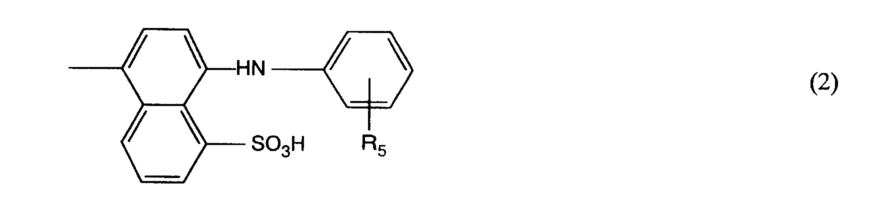 und R₅ Wasserstoff oder C₁-C₄-Alkyl bedeutet, und
R₁ an den Benzolring A in 3-Stellung, relativ zur Azogruppe, gebunden ist

In der GB-A-1 322 704 werden Farbstoffe offenbart, die sich von den Farbstoffen der Formel (1) hinsichtlich der Stellung der Acetylaminogruppe am terminalen Phenylring der Disazogruppe unterscheiden.

In der GB-A-1 265 428 werden Farbstoffe offenbart, die sich von den Farbstoffen der Formel (1) durch die fehlende Sulfogruppe an der Naphthalin-Mittelkomponente unterscheiden.

Bedeuten R₂ und R₅ C₁₋₄-Alkyl, so handelt es sich um Methyl, Äthyl, n-Propyl, Isopropyl, n-Butyl, sek.-Butyl, Isobutyl oder tert.-Butyl. Der Rest R₂ als C₁₋₄-Alkyl kann durch Halogen, wie z.B. Fluor, Brom oder insbesondere Chlor, Hydroxy oder C₁₋₄-Alkoxy, wie z.B. Methoxy, Äthoxy, n-Propoxy, Isopropoxy, n-Butoxy oder sek.-Butoxy, substituiert sein.

Bevorzugt sind Azofarbstoffe der Formel (1), worin die Sulfogruppe an den Benzolring B in 6- oder 7-Stellung, relativ zu einer der Azogruppen, gebunden ist.

Ebenfalls bevorzugt sind Azofarbstoffe der Formel (1), worin R₂ C₁-C₄-Alkyl, insbesondere C₂-C₄-Alkyl ist. Vorzugsweise ist R₂ Aethyl.

R₅ ist bevorzugt Wasserstoff oder Methyl und insbesondere Wasserstoff.

Besonders bevorzugt sind Azofarbstoffe der Formel 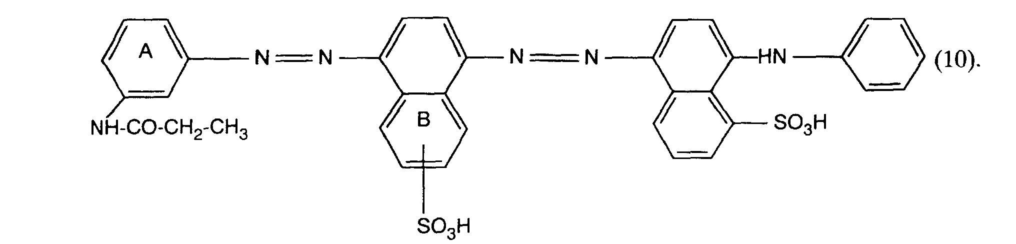 Ein weiterer Gegenstand der Erfindung sind Farbstoffmischungen, welche mindestens zwei der erfindungsgemässen Farbstoffe der Formel (1) enthalten. Für die Farbstoffe der Formel (1) gelten hierbei die oben angegebenen Bedeutungen und Bevorzugungen.

Besonders interessante Farbstoffmischungen sind Isomerengemische der erfindungsgemässen Farbstoffe, welche dadurch gekennzeichnet sind, dass sie einen Azofarbstoff der Formel 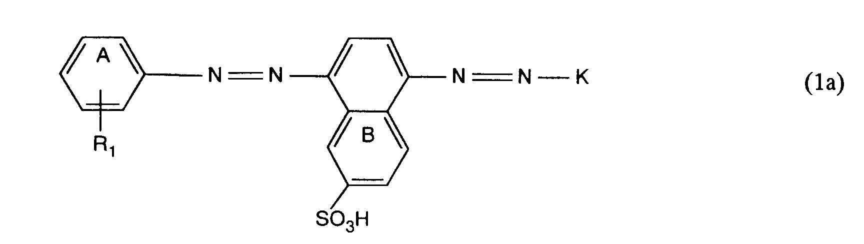 und einen Azofarbstoff der Formel 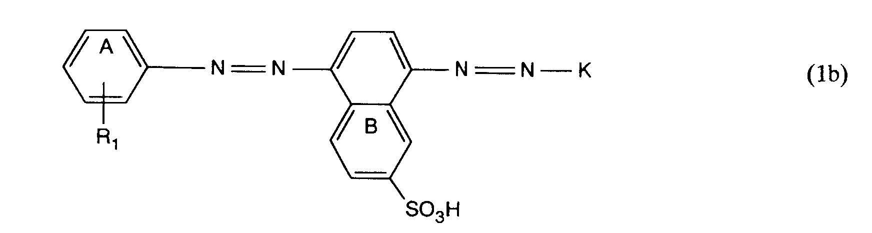 enthalten, worin K und R₁ die unter Formel (1) angegebenen Bedeutungen haben. Die Farbstoffe der Formeln (1a) und (1b) der Isomerengemische unterscheiden sich somit nur hinsichtlich der Position der an den Benzolring B gebundenen Sulfogruppe. Für die Isomerengemische der Farbstoffe der Formeln (1a) und (1b) gelten die oben für die Azofarbstoffe der Formel (1) angegebenen Bevorzugungen.

Gegenstand der Erfindung ist ferner ein Verfahren zur Herstellung der Azofarbstoffe der Formel (1), welches dadurch gekennzeichnet ist, dass man ein Amin der Formel 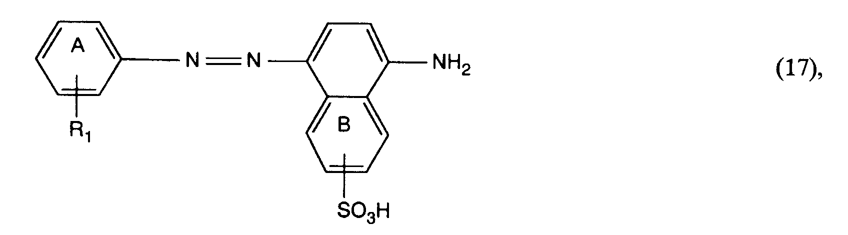 worin R₁ die unter Formel (1) angegebenen Bedeutungen hat, diazotiert und auf eine Kupplungskomponente der Formel 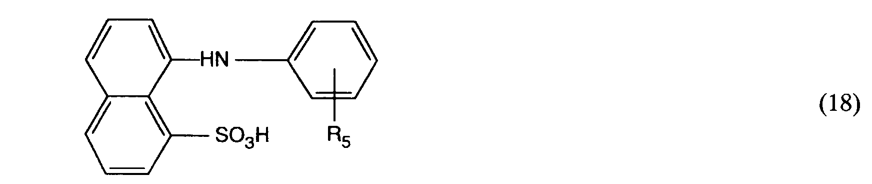 worin R₅ die unter Formel (1) angegebenen Bedeutungen hat, kuppelt,

Die Amine der Formel (17) und die Kupplungskomponente der Formel (18) sind bekannt oder können in Analogie zu bekannten Verfahren hergestellt werden.

So werden beispielsweise die Amine der Formel (17) durch Diazotierung einer Verbindung der Formel 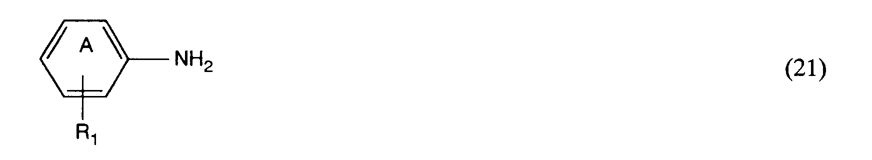 und anschliessende Kupplung auf eine Kupplungskomponente der Formel 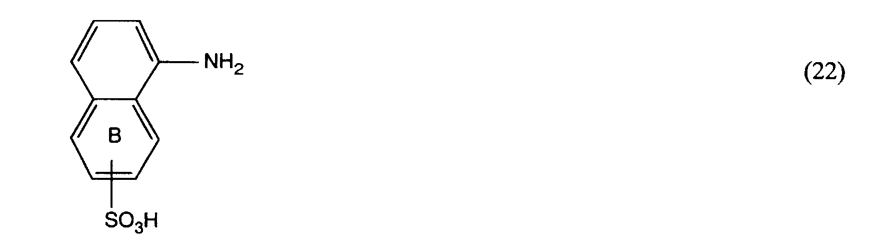 erhalten.

Die Diazotierung der Amine der Formeln (17) und (21) erfolgt in an sich bekannter Weise, z.B. mit einem Nitrit, z.B. mit einem Alkalimetallnitrit, wie Natriumnitrit, in einem mineralsauren Medium, z.B. in einem salzsauren Medium, bei Temperaturen von beispielsweise -5 bis 30°C und vorzugsweise bei 0 bis 10°C.

Die Kupplung auf die Kupplungskomponenten der Formeln (18) und (22) erfolgt jeweils in an sich bekannter Weise, bei sauren, neutralen bis schwach alkalischen pH-Werten und Temperaturen von beispielsweise 0 bis 30°C.

Als Beispiel für Verbindungen der Formel (21) sei 3-Acetylaminoanilin genannt.

Als Beispiele für Kupplungskomponenten der Formel (22) seien 1-Aminonaphthalin-6-sulfonsäure, 1-Aminonaphthalin-7-sulfonsäure sowie ein Gemisch aus 1-Aminonaphthalin-6-sulfonsäure und 1-Aminonaphthalin-7-sulfonsäure genannt.

Als Beispiele für Kupplungskomponenten der Formel (18) seien 1-Phenylamino-naphthalin-8-sulfonsäure und 1-(4'-Methyl)-phenylamino-naphthalin-8-sulfonsäure genannt.

Für den Substituenten R₁ der Amine der Formel (17) und den Substituenten R₅ der Kupplungskomponente der Formel (18) gelten die oben angegebenen Bedeutungen und Bevorzugungen.

Die Farbstoffe der Formel (1) liegen entweder in der Form ihrer freien Säure oder vorzugsweise als deren Salze vor.

Als Salze kommen beispielsweise die Alkali- oder Ammoniumsalze oder die Salze eines organischen Amins in Betracht.

Als Beispiel seien die Natrium-, Lithium-, Kalium- oder Ammoniumsalze oder das Salz des Mono-, Di- oder Triäthanolamins genannt.

Die erfindungsgemässen Azofarbstoffe der Formel (1) und die erfindungsgemässen Farbstoffmischungen eignen sich nach an sich bekannten Methoden zum Färben und Bedrucken von stickstoffhaltigen oder hydroxygruppenhaltigen Fasermaterialien, Papier oder Leder, wie z.B. textilen Fasermaterialien aus Cellulose, Seide und insbesondere natürlichen und synthetischen Polyamiden. Die erfindungsgemässen Azofarbstoffe der Formel (1) und die erfindungsgemässen Farbstoffmischungen können in allgemein üblicher, gegebenenfalls zuvor aufbereiteter Form zum Färben oder Bedrucken verwendet werden. Man erhält egale Färbungen in blauen, roten oder gelben Farbtönen mit guten Allgemeinechtheiten, insbesondere guter Reib-, Nass-, Nassreib- und Lichtechtheit. Ferner sind die erfindungsgemässen Farbstoffe gut wasserlöslich. Weiterhin zeigen die erfindungsgemässen Farbstoffe ein gutes Aufbauvermögen und sind gut mit anderen Farbstoffen kombinierbar. Das oben genannte Textilmaterial kann in den verschiedensten Verarbeitungsformen vorliegen, wie z.B. als Faser, Garn, Gewebe oder Gewirke.

Ein weiterer Gegenstand der Erfindung ist ein Verfahren zum Trichromie-Färben oder -Bedrucken von natürlichen oder synthetischen Polyamidfasermaterialien, welches dadurch gekennzeichnet ist, dass man mindestens einen rotfärbenden Farbstoff der Formel 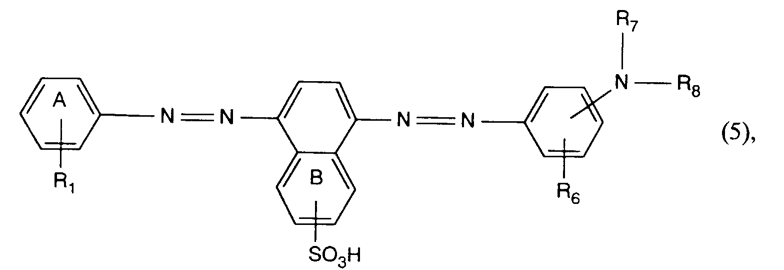 worin R₁ ein Rest der Formel -NH-CO-R₂ oder -CO-N(R₃)R₄ ist, R₂ Amino oder gegebenenfalls durch Halogen, Hydroxy oder C₁-C₄-Alkoxy substituiertes C₁-C₄-Alkyl ist, R₃ und R₄ unabhängig voneinander Wasserstoff, C₁-C₄-Alkyl oder C₂-C₄-Hydroxyalkyl bedeuten, R₆ Wasserstoff oder C₁-C₄-Alkyl und R₇ und R₈ unabhängig voneinander gegebenenfalls durch Hydroxy oder gegebenenfalls weitersubstituiertes Phenyl substituiertes C₁-C₄-Alkyl sind, zusammen mit mindestens einem gelb- oder orangefärbenden Farbstoff und mindestens einem blaufärbenden Farbstoff verwendet.

Bedeuten R₂, R₃, R₄, R₆, R₇ und R₈ C₁₋₄-Alkyl, so handelt es sich um Methyl, Äthyl, n-Propyl, Isopropyl, n-Butyl, sek.-Butyl, Isobutyl oder tert.-Butyl. Der Rest R₂ als C₁₋₄-Alkyl kann durch Halogen, wie z.B. Fluor, Brom oder insbesondere Chlor, Hydroxy oder C₁₋₄-Alkoxy, wie z.B. Methoxy, Athoxy, n-Propoxy, Isopropoxy, n-Butoxy oder sek.-Butoxy, substituiert sein. Die Reste R₇ und R₈ als C₁₋₄-Alkyl können unabhängig voneinander durch Hydroxy oder gegebenenfalls weitersubstituiertes Phenyl substituiert sein, wobei als Substituenten des Phenylrestes z.B. Sulfo, Nitro, Halogen, wie Fluor, Brom oder insbesondere Chlor, C₁₋₄-Alkyl, wie Methyl, Äthyl, n-Propyl, Isopropyl, n-Butyl, sek.-Butyl, Isobutyl oder tert.-Butyl, oder C₁₋₄-Alkoxy, wie z.B. Methoxy, Athoxy, n-Propoxy, Isopropoxy, n-Butoxy oder sek.-Butoxy in Betracht kommen. Als Substituent des genannten Phenylrestes kommt insbesondere die Sulfogruppe in Betracht.

Als C₂-C₄-Hydroxyalkyl kommt für R₃ und R₄ ein geradkettiger oder verzweigter Hydroxyalkylrest in Betracht, wie z.B. der β-Hydroxyäthyl-, β-Hydroxypropyl-, β-Hydroxybutyl- oder der α-Äthyl-β-hydroxyäthylrest.

Bevorzugt verwendet man als rotfärbenden Farbstoff mindestens einen Farbstoff der Formel (5), worin R₂ C₁-C₄-Alkyl, insbesondere C₂-C₄-Alkyl ist. Vorzugsweise ist R₂ Aethyl.

R₃ und R₄ sind unabhängig voneinander bevorzugt Wasserstoff oder C₂-C₄-Hydroxyalkyl, insbesondere Wasserstoff oder β-Hydroxyäthyl.

R₆ ist bevorzugt Wasserstoff oder Methyl und insbesondere Wasserstoff.

R₇ und R₈ sind unabhängig voneinander vorzugsweise C₁-C₄-Alkyl oder C₂-C₄-Hydroxyalkyl.

Für den Rest R₂ gelten hierbei die oben angegebenen Bedeutungen und Bevorzugungen.

Bevorzugt verwendet man als rotfärbenden Farbstoff der Formel (5) mindestens einen Farbstoff der Formel (6) 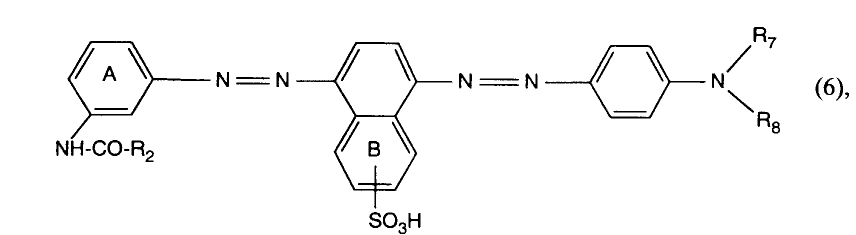 worin R₂ Methyl oder Aethyl und R₇ und R₈ unabhängig voneinander Aethyl oder β-Hydroxyäthyl sind, und ganz besonders bevorzugt mindestens einen Farbstoff der Formeln (12), (13), (14) und (15).

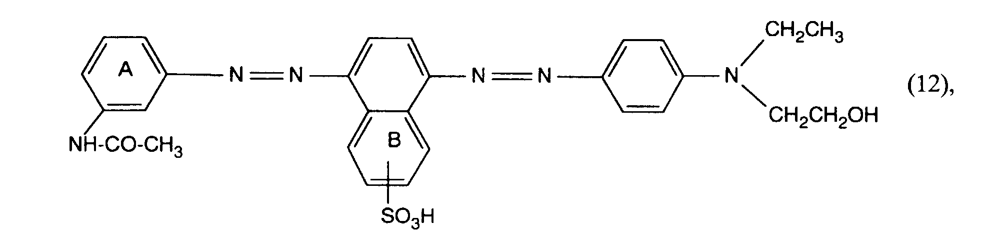

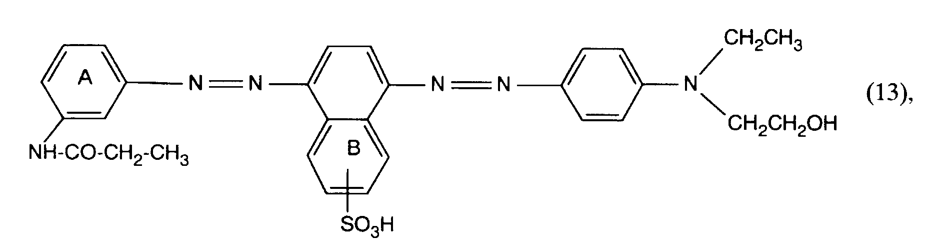

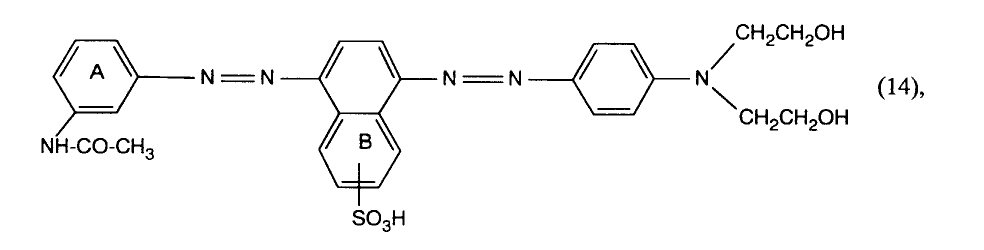

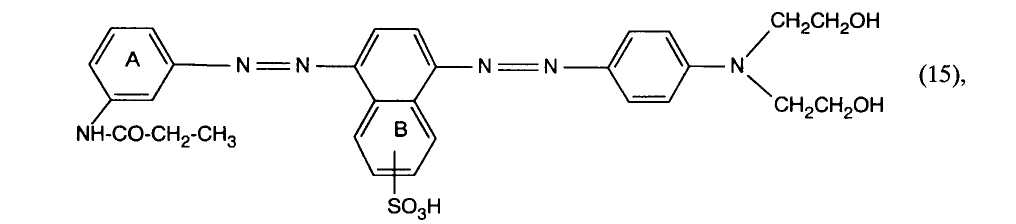

Als gelb- oder orangefärbenden Farbstoff verwendet man bevorzugt mindestens einen der Farbstoffe der Formeln 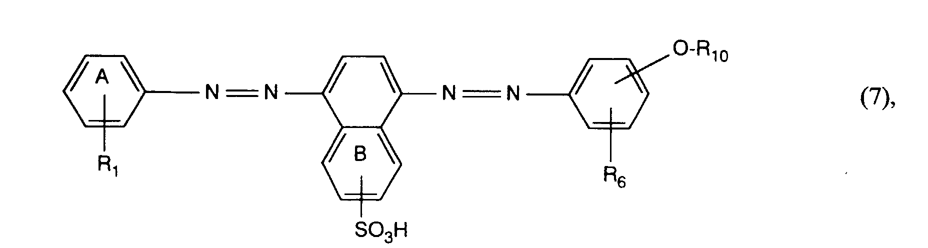 worin R₁ und R₆ die unter Formel (5) angegebenen Bedeutungen und Bevorzugungen haben und R₁₀ C₁-C₄-Alkyl oder C₂-C₄-Hydroxyalkyl ist, 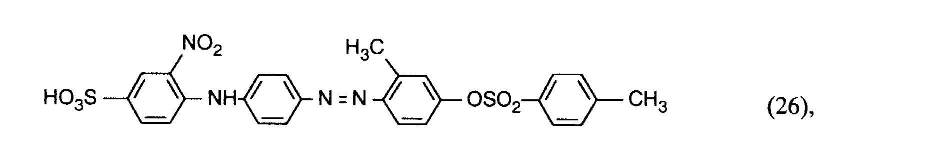 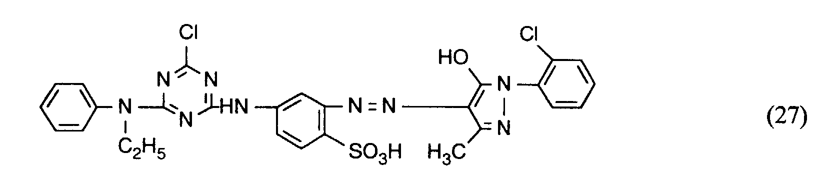 und 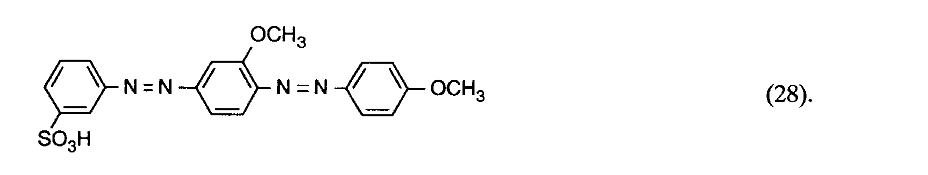 Bedeutet R₁₀ in Formel (7) C₁₋₄-Alkyl, so handelt es sich beispielsweise um Methyl, Äthyl, n-Propyl, Isopropyl, n-Butyl oder sek.-Butyl.

Als C₂-C₄-Hydroxyalkyl kommt für R₁₀ in Formel (7) ein geradkettiger oder verzweigter Hydroxyalkylrest in Betracht, wie z.B. der β-Hydroxyäthyl-, β-Hydroxypropyl-, β-Hydroxybutyl- oder der α-Äthyl-β-hydroxyäthylrest.

Besonders bevorzugt als gelb- oder orangefärbende Farbstoffe sind die Farbstoffe der Formeln (7), (26), (27) und (28), insbesondere die Farbstoffe der Formeln 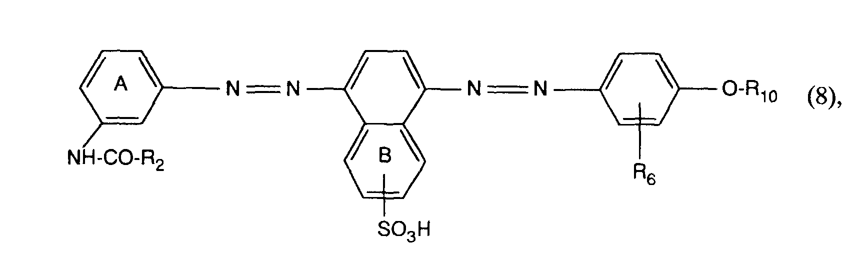 worin R₂ Methyl oder Aethyl, R₆ Wasserstoff oder Methyl und R₁₀ Methyl, Aethyl oder β-Hydroxyäthyl ist,
(26), (27) und (28).

Als blaufärbenden Farbstoff verwendet man bevorzugt mindestens einen der Farbstoffe der Formeln 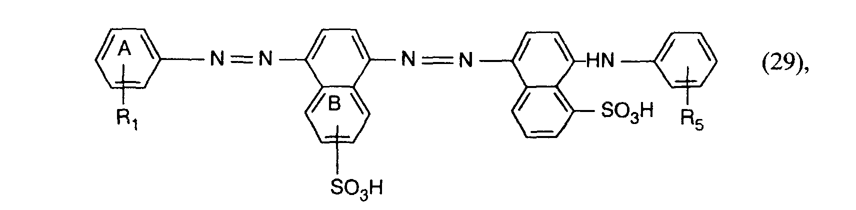 worin R₁ die unter Formel (5) und R₅ die oben angegebenen Bedeutungen und Bevorzugungen hat,
und

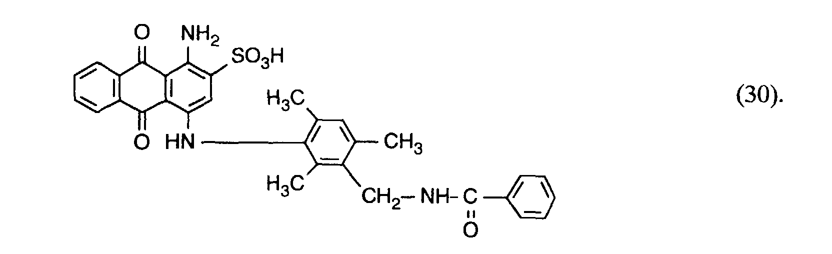

Besonders bevorzugt als blaufärbende Farbstoffe sind die Farbstoffe der Formeln (10) und (30).

In einer besonders wichtigen Ausführungsform des erfindungsgemässen Verfahrens zum Trichromie-Färben oder -Bedrucken verwendet man mindestens einen rotfärbenden Farbstoff der Formel (5) zusammen mit mindestens einem gelb- oder orangefärbenden Farbstoff der Formeln (7) und (26) und mindestens einem blaufärbenden Farbstoff der Formel (29), wobei für die Farbstoffe der Formeln (5), (7), und (29) die oben angegebenen Bedeutungen und Bevorzugungen gelten.

In einer ganz besonders wichtigen Ausführungsform des erfindungsgemässen Verfahrens zum Trichromie-Färben oder -Bedrucken verwendet man mindestens einen rotfärbenden Farbstoff der Formel (5) zusammen mit einem gelb- oder orangefärbenden Farbstoff der Formel (26) und einem blaufärbenden Farbstoff der Formel (30), wobei für die Farbstoffe der Formel (5) die oben angegebenen Bedeutungen und Bevorzugungen gelten.

Die in dem erfindungsgemässen Verfahren verwendeten Farbstoffe der Formeln (5) und (7) erhält man, indem man ein Amin der Formel (17), worin R₁ die unter Formel (5) angegebenen Bedeutungen hat, diazotiert und auf eine Kupplungskomponente der Formel 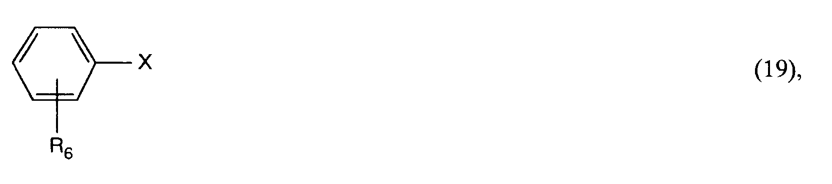 worin X ein Rest der Formel -N(R₇)R₈ ist und R₆, R₇ und R₈ die unter Formel (5) angegebenen Bedeutungen haben, kuppelt,
oder ein Amin der Formel (17) diazotiert, auf eine Kupplungskomponente der Formel 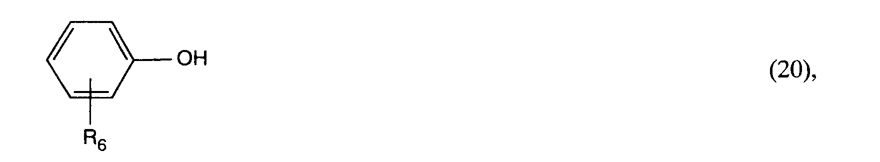 worin R₆ die unter Formel (7) angegebenen Bedeutungen hat, kuppelt, und anschliessend die Hydroxygruppe mit einem Alkylierungsmittel zur C₁-C₄-Alkoxy- oder C₂-C₄-Hydroxyalkoxygruppe umsetzt.

Die Amine der Formel (17) und die Kupplungskomponenten der Formeln (19) und (20) sind bekannt oder können in Analogie zu bekannten Verfahren hergestellt werden.

Die Amine der Formel (17) werden beispielsweise durch Diazotierung einer Verbindung der Formel (21) und anschliessende Kupplung auf eine Kupplungskomponente der Formel (22) wie oben beschrieben erhalten.

Als Beispiele für Verbindungen der Formel (21) seien 3- oder 4-Acetylaminoanilin, 3-oder 4-Propionylaminoanilin, 3- oder 4-Aminocarbonylanilin und 3- oder 4-(N-β-Hydroxyäthylaminocarbonyl)anilin genannt.

Als Beispiele für Kupplungskomponenten der Formel (19) seien N-Aethyl-N-β-hydroxyäthyl-anilin und N,N-Di-(β-hydroxyäthyl)-anilin genannt.

Die Kupplung auf die Kupplungskomponenten der Formel (19) und (20) erfolgt jeweils in an sich bekannter Weise, bei sauren, neutralen bis schwach alkalischen pH-Werten und Temperaturen von beispielsweise 0 bis 30°C.

Die Alkylierung erfolgt z.B. in wässrigem Medium, bei neutralem bis alkalischem pH-Wert und einer Temperatur von beispielsweise 20 bis 40°C. Als Alkylierungsmittel werden beispielsweise Di(C₁-C₄-Alkyl)sulfat, C₁-C₄-Alkylhalogenid, Di(C₁-C₄-Alkyl)carbonat, C₁-C₄-Alkylphosphonat sowie C₁-C₄-Alkylenoxid verwendet. Als Beispiele seien Dimethylsulfat, Diäthylsulfat, Chloräthanol, Aethylencarbonat, Aethylenoxid, Propylenoxid und Butylenoxid genannt.

Das erfindungsgemässe Verfahren zum Trichromie-Färben oder -Bedrucken kann auf die üblichen Färbe- bzw. Druckverfahren angewendet werden. Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel, wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Das erfindungsgemässe Verfahren ist besonders zum Färben aus Kurzflotten, wie z.B. bei Kontinuefärbeverfahren oder diskontinuierlichen und kontinuierlichen Schaumfärbeverfahren, geeignet.

Die in dem erfindungsgemässen Verfahren verwendeten Farbstoffe zeichnen sich beim Trichromie-Färben oder -Bedrucken durch gleichmässigen Farbaufbau, gutes Aufziehverhalten, gute Nuancenkonstanz auch in verschiedenen Konzentrationen, gute Echtheiten sowie insbesondere durch sehr gute Kombinierbarkeit aus.

Das erfindungsgemässe Verfahren eignet sich zum Färben oder Bedrucken sowohl von natürlichen Polyamidfasermaterialien, wie z.B. Wolle, wie insbesondere von synthetischen Polyamidfasermaterialien, wie z.B. Polyamid 6 oder Polyamid 6.6, und es ist geeignet zum Färben oder Bedrucken von Woll- und synthetischen Polyamid-Mischgeweben oder -Garnen.

Das genannte Textilmaterial kann dabei in den verschiedensten Verarbeitungsformen vorliegen, wie z.B. als Faser, Garn, Gewebe oder Gewirke und insbesondere in Form von Teppichen.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

In den folgenden Beispielen 1 bis 40 ist die Herstellung von Farbstoffen der Formeln (1), (5), (7) und (29) beschrieben.

Beispiel 1: Bei Raumtemperatur werden 17,4 Teile 3-Amino-acetanilid in 200 Teilen Wasser suspendiert und mit 27 Teilen konzentrierter Salzsäure versetzt. Durch Zugabe von Eis wird die Mischung auf eine Temperatur von 5 bis 10° abgekühlt und unter gutem Rühren mit 25,5 Teilen einer 4-normalen Natriumnitrit-Lösung versetzt. Es wird eine Stunde bei einer Temperatur von 0 bis 5° nachgerührt und anschliessend durch Zugabe von 0,5 Teilen Sulfaminsäure überschüssiges Nitrit zerstört. Daraufhin wird eine separat hergestellte Lösung aus 23,7 Teilen eines schwach alkalischen Gemisches von 1-Aminonaphthalin-6-sulfonsäure und 1-Aminonaphthalin-7-sulfonsäure, 280 Teilen Wasser und 11 Teilen konzentrierter Natriumhydroxid-Lösung zugetropft. Anschliessend wird der pH mit konzentrierter Natriumhydroxid-Lösung auf einen Wert von 4 eingestellt und über Nacht bei Raumtemperatur nachgerührt. Nach Zugabe von Natriumchlorid wird das Reaktionsprodukt abfiltriert, mit 100 Teilen 10%-iger wässriger Natriumchlorid-Lösung nachgewaschen und getrocknet. Man erhält 35,5 Teile eines Reaktionsprodukts, das in Form der freien Säure dem Isomerengemisch aus den Verbindungen der Formeln 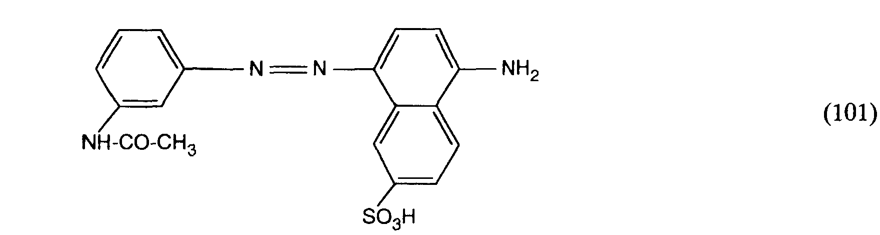 und 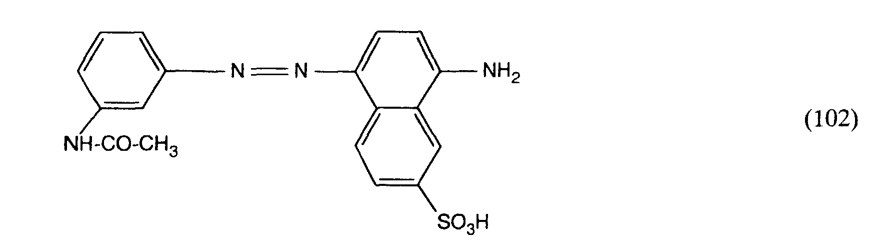 entspricht.

Die Verbindungen der Formeln (101) und (102) können auch einzeln erhalten werden, indem man anstelle des Gemisches von 1-Aminonaphthalin-6- und -7-sulfonsäure 1-Aminonaphthalin-6-sulfonsäure oder 1-Aminonaphthalin-7-sulfonsäure verwendet.

Beispiele 2 bis 5: Verfährt man wie in Beispiel 1 angegeben, verwendet jedoch statt 17,4 Teile 3-Amino-acetanilid eine äquimolare Menge 3-Propionamidoanilin,
3-Aminocarbonylanilin, 4-Aminocarbonylanilin oder
3-(N-β-Hydroxyethylaminocarbonyl)anilin, so erhält man die in Tabelle 1 in Form der freien Säuren angegebenen Isomerengemische.

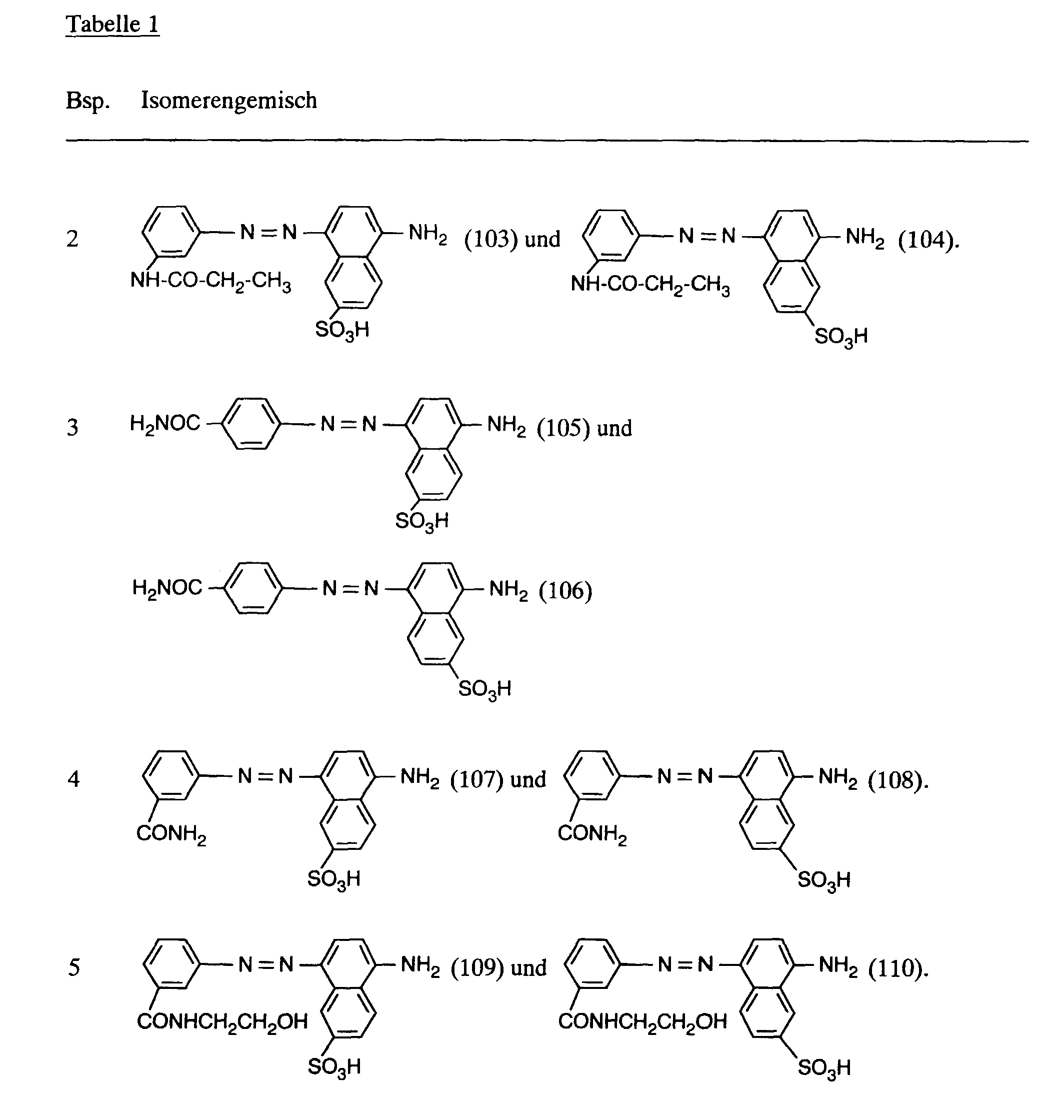

Die Verbindungen der in Tabelle 1 angegebenen Isomerengemische können auch einzeln erhalten werden, indem anstelle des Gemisches von 1-Aminonaphthalin-6- und -7-sulfonsäure 1-Aminonaphthalin-6-sulfonsäure oder 1-Aminonaphthalin-7-sulfonsäure verwendet.

Beispiel 6: Bei einer Temperatur von 40° werden 6,6 Teile des gemäss Beispiel 1 erhaltenen Isomerengemisches der Verbindungen der Formeln (101) und (102) in 150 Teilen Wasser und 1,5 Teilen konzentrierter Natriumhydroxid-Lösung gelöst. Nach Zugabe von 1,3 Teilen einer 4-normalen Natriumnitrit-Lösung wird die Reaktionsmischung durch Zugabe von Eis auf eine Temperatur von 5° abgekühlt. Es werden 7,6 Teile konzentrierter Salzsäure zugetropft und die Mischung über Nacht bei einer Temperatur von 0 bis 10° gerührt. Anschliessend wird durch Zugabe von 0,4 Teilen Sulfaminsäure überschüssiges Nitrit zerstört. Daraufhin wird eine separat hergestellte Lösung aus 2,5 Teilen N-Aethyl-N-β-hydroxyäthyl-anilin und 23 Teilen 1-normaler wässriger Salzsäure-Lösung zugegeben. Anschliessend wird der pH durch Zugabe von konzentrierter Natriumhydroxid-Lösung bei einem Wert von 4,7 bis 5,3 gehalten, die Reaktionsmischung 30 Minuten bei einer Temperatur von 5 bis 10° gerührt und weitere 3 Stunden bei Raumtemperatur nachgerührt. Nach Filtration und Trocknung erhält man 7,7 Teile eines Reaktionsprodukts, das in Form der freien Säure dem Isomerengemisch aus den Farbstoffen der Formeln 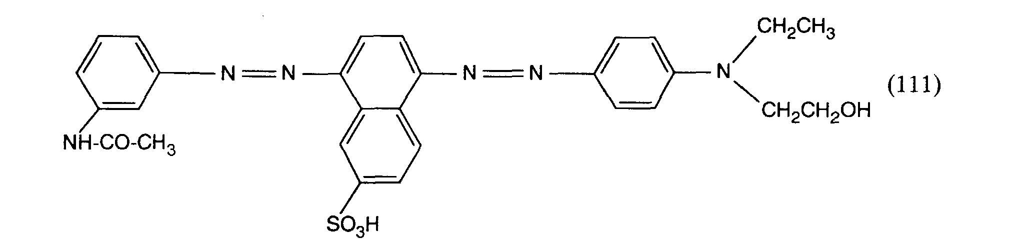 und 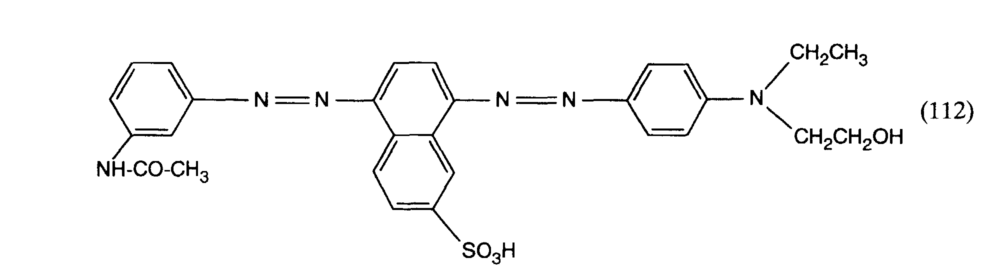 entspricht. Das Isomerengemisch der Farbstoffe der Formeln (111) und (112) färbt natürliches und synthetisches Polyamidfasermaterial in bordeauxroten Farbtönen.

Die Farbstoffe der Formeln (111) und (112) können auch einzeln erhalten werden, indem man in Beispiel 6 anstelle eines Gemisches der Verbindungen der Formeln (101) und (102) die jeweilige einzelne Verbindung verwendet.

Beispiele 7 bis 10: Verfährt man wie in Beispiel 6 angegeben, verwendet jedoch anstelle von 6,6 Teilen des Isomerengemisches der Verbindungen der Formeln (101) und (102) eine äquimolare Menge eines Isomerengemisches gemäss einem der Beispiele 2 bis 5, so erhält man die in Tabelle 2 in Form der freien Säuren angegebenen
Farbstoff-Isomerengemische, die natürliches und synthetisches Polyamidfasermaterial in bordeauxroten Farbtönen färben.

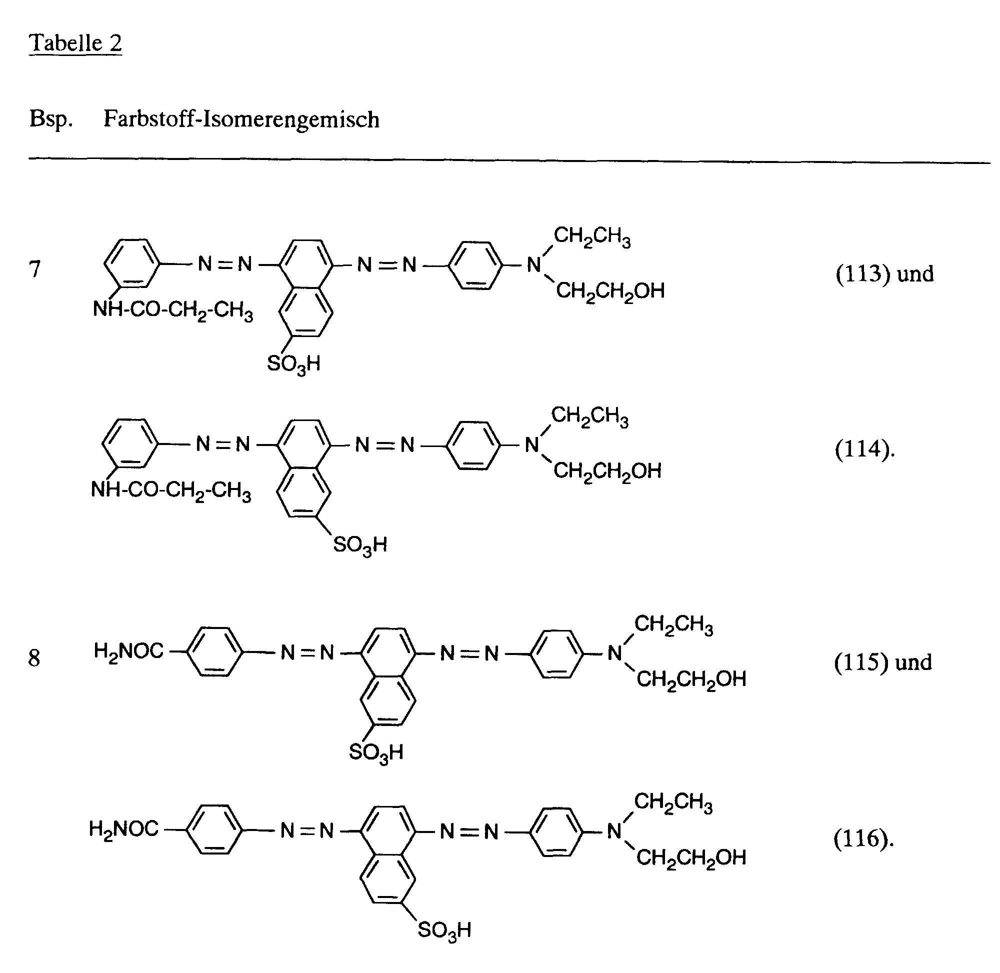

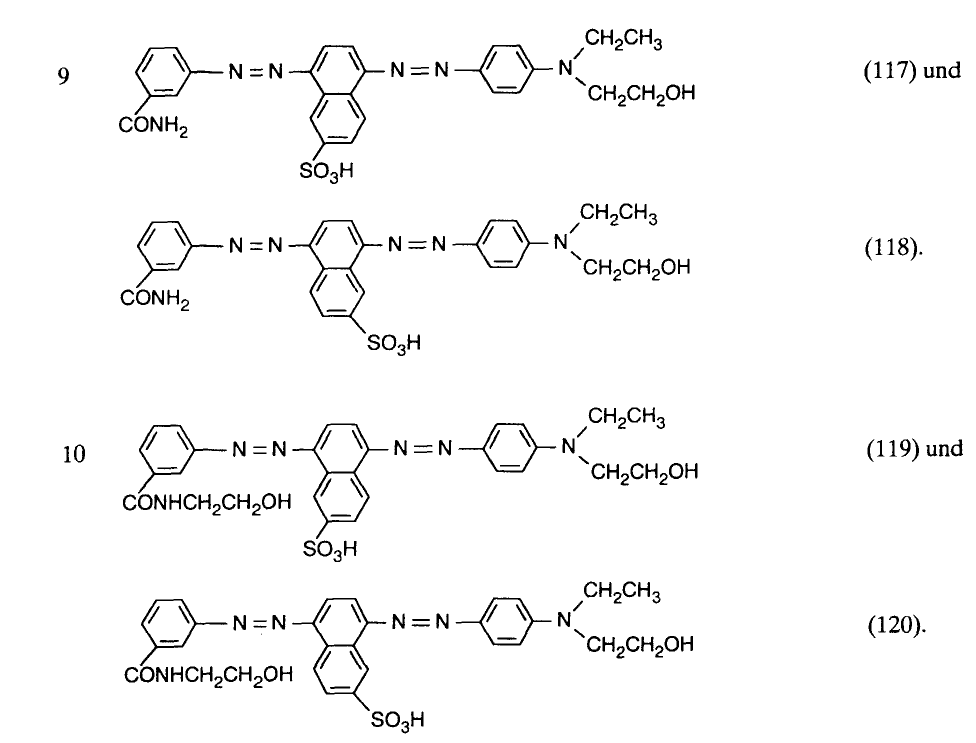

Die Farbstoffe der in Tabelle 2 angegebenen Isomerengemische können auch einzeln erhalten werden, indem man anstelle eines Isomerengemisches gemäss den Beispielen 2 bis 5 die entsprechende einzelne Verbindung verwendet.

Beispiel 11: Bei Raumtemperatur werden 8,8 Teile des gemäss Beispiel 1 erhaltenen Isomerengemisches der Verbindungen der Formeln (101) und (102) in 200 Teilen Wasser und 1,0 Teilen konzentrierter Natriumhydroxid-Lösung gelöst. Nach Zugabe von 1,72 Teilen einer 4-normalen Natriumnitrit-Lösung wird die Reaktionsmischung durch Zugabe von Eis auf eine Temperatur von ca. 1° abgekühlt. Es werden 10 Teile konzentrierter Salzsäure zugetropft und die Mischung über Nacht bei einer Temperatur von 0 bis 10° gerührt. Anschliessend wird durch Zugabe von 0,6 Teilen Sulfaminsäure überschüssiges Nitrit zerstört und der pH der Mischung mit 3,5 Teilen kalziniertem Natriumcarbonat auf einen Wert von 2 gestellt. Daraufhin wird eine separat hergestellte Lösung aus 3,6 Teilen N,N-Di-(β-hydroxyäthyl)anilin und 30 Teilen 1-normaler wässriger Salzsäure-Lösung zugegeben. Anschliessend wird der pH durch Zugabe von konzentrierter Natriumhydroxid-Lösung bei einem Wert von 5 bis 5,5 gehalten, die Reaktionsmischung 20 Minuten bei einer Temperatur von 5 bis 10° gerührt, mit konzentrierter Natriumhydroxid-Lösung auf einen pH - Wert von 8 gestellt und auf 20° erwärmt. Nach Zugabe von Natriumchlorid wird das Reaktionsprodukt abfiltriert und getrocknet. Man erhält 9 Teile eines Reaktionsprodukts, das in Form der freien Säure dem Isomerengemisch aus den Farbstoffen der Formeln 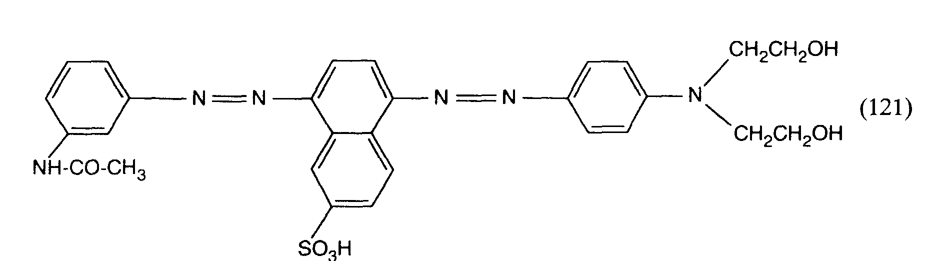 und 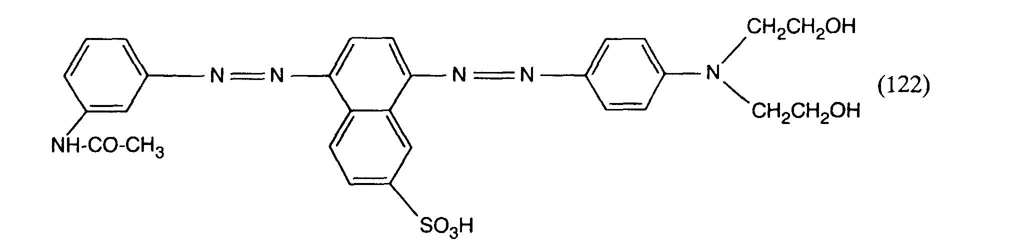 entspricht. Das Isomerengemisch der Farbstoffe der Formeln (121) und (122) färbt natürliches und synthetisches Polyamidfasermaterial in bordeauxroten Farbtönen.

Die Farbstoffe der Formeln (121) und (122) können auch einzeln erhalten werden, indem man in Beispiel 11 anstelle eines Gemisches der Verbindungen der Formeln (101) und (102) die jeweilige einzelne Verbindung verwendet.

Beispiele 12 bis 15: Verfährt man wie in Beispiel 11 angegeben, verwendet jedoch anstelle von 8,8 Teilen des Isomerengemisches der Verbindungen der Formeln (101) und (102) eine äquimolare Menge eines Isomerengemisches gemäss einem der Beispiele 2 bis 5, so erhält man die in Tabelle 3 in Form der freien Säuren angegebenen Farbstoff-Isomerengemische, die natürliches und synthetisches Polyamidfasermaterial in bordeauxroten Farbtönen färben.

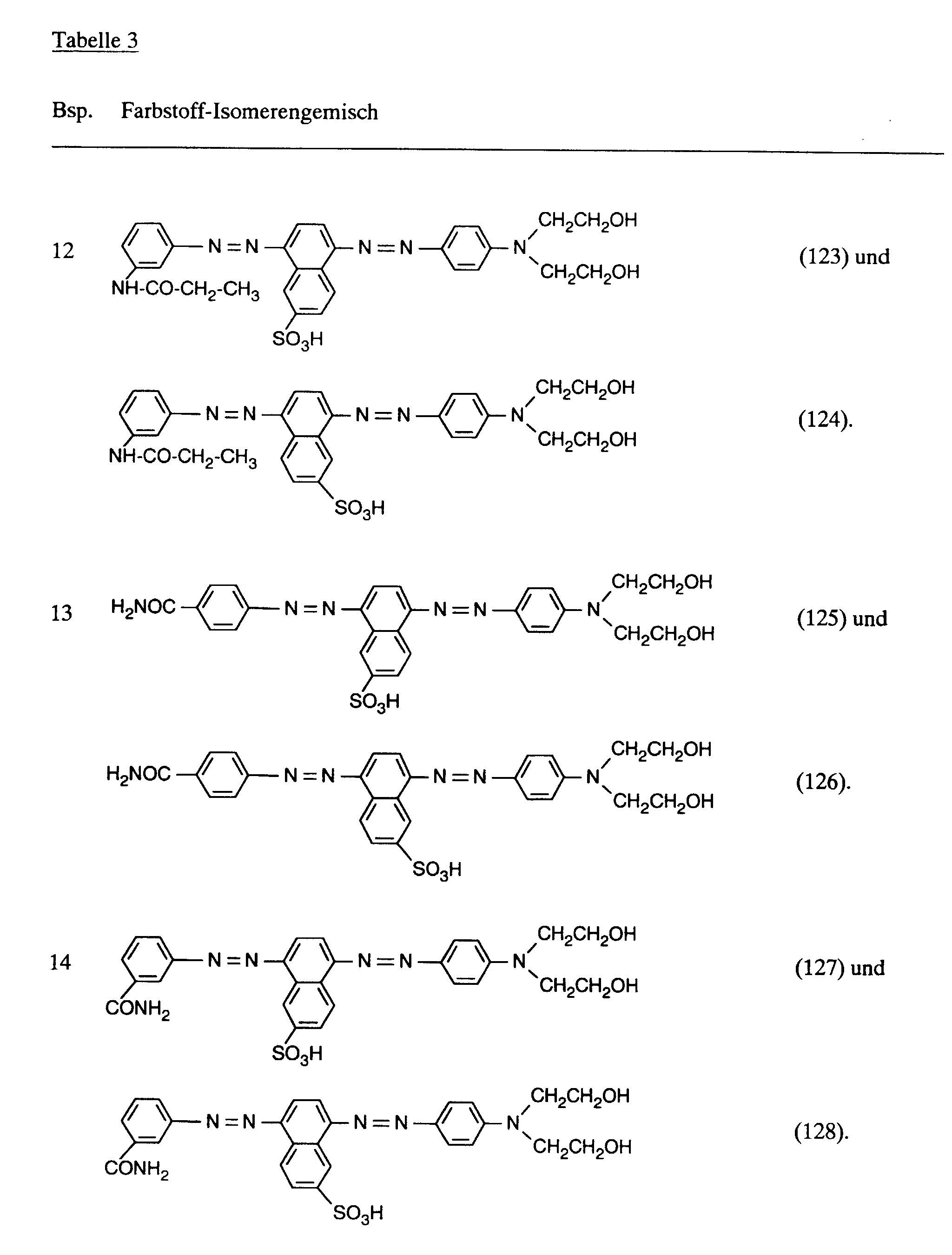

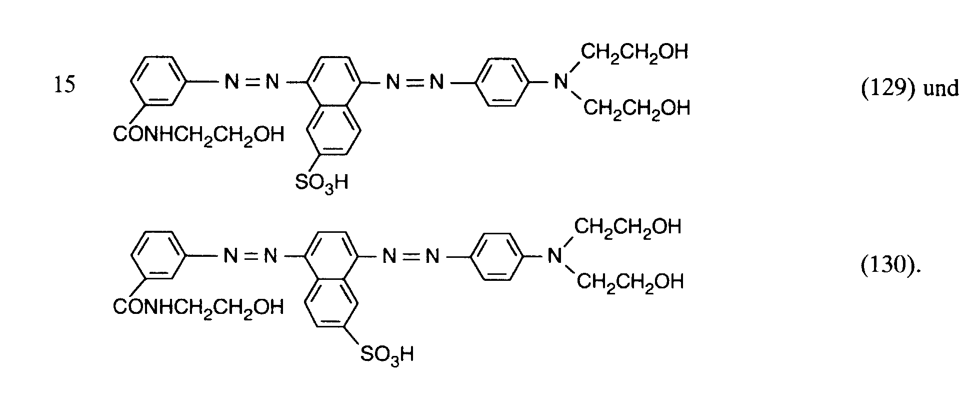

Die Farbstoffe der in Tabelle 3 angegebenen Isomerengemische können auch einzeln erhalten werden, indem man anstelle eines Isomerengemisches gemäss den Beispielen 2 bis 5 die entsprechende einzelne Verbindung verwendet.

Beispiel 16: Eine Suspension von 37,4 Teilen des gemäss Beispiel 1 erhaltenen Isomerengemisches der Verbindungen der Formeln (101) und (102) in 600 Teilen Wasser wird durch Zugabe von 10-normaler Natriumhydroxid-Lösung auf einen pH-Wert von 12 gestellt. Durch Zugabe von 25 Teilen Eis wird auf eine Temperatur von ca. 2° abgekühlt. Es werden 31 Teile einer 4-normalen Natriumnitrit-Lösung zugegeben, innerhalb von 5 Minuten bei gutem Rühren 55 Teile 10-normaler Salzsäure zugetropft und die Mischung 14 Stunden bei einer Temperatur von 6 bis 10° gerührt. Anschliessend wird durch Zugabe von 1,2 Teilen Sulfaminsäure überschüssiges Nitrit zerstört und der pH der Mischung mit 14 Teilen Natriumcarbonat auf einen Wert von 1,5 gestellt. Daraufhin wird eine separat hergestellte Lösung aus 150 Teilen Wasser, 29,9 Teilen 1-Phenylaminonaphthalin-8-sulfonsäure, 2,5 Teilen Dinatriumhydrogenphosphat x 12 H₂O und 5,5 Teilen 10-normaler Natriumhydroxid-Lösung innerhalb von 30 Minuten zugegeben. Innerhalb eines Zeitraumes von einer Stunde werden gleichmässig 15 Teile 10-normaler Natriumhydroxid-Lösung zudosiert, anschliessend 22 Teile Natriumchlorid eingestreut und die Mischung 2,5 Stunden bei Raumtemperatur nachgerührt. Nach Filtration und Trocknung erhält man 76,2 Teile eines Reaktionsprodukts, das in Form der freien Säure dem Isomerengemisch aus den Farbstoffen der Formeln 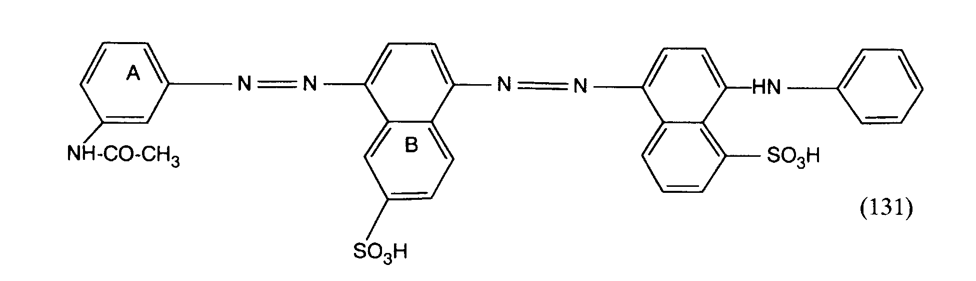 und 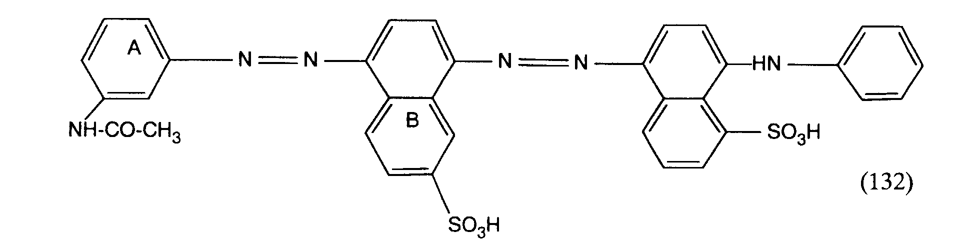 entspricht. Das Isomerengemisch der Farbstoffe der Formeln (131) und (132) färbt natürliches und synthetisches Polyamidfasermaterial in marineblauen Farbtönen.

Die Farbstoffe der Formeln (131) und (132) können auch einzeln erhalten werden, indem man in Beispiel 16 anstelle eines Gemisches der Verbindungen der Formeln (101) und (102) die jeweilige einzelne Verbindung verwendet.

Beispiele 17 bis 20: Verfährt man wie in Beispiel 16 angegeben, verwendet jedoch anstelle von 37,4 Teilen des Isomerengemisches der Verbindungen der Formeln (101) und (102) eine äquimolare Menge eines Isomerengemisches gemäss einem der Beispiele 2 bis 5, so erhält man die in Tabelle 4 in Form der freien Säuren angegebenen Farbstoff-Isomerengemische, die natürliches und synthetisches Polyamidfasermaterial in blauen Farbtönen färben.

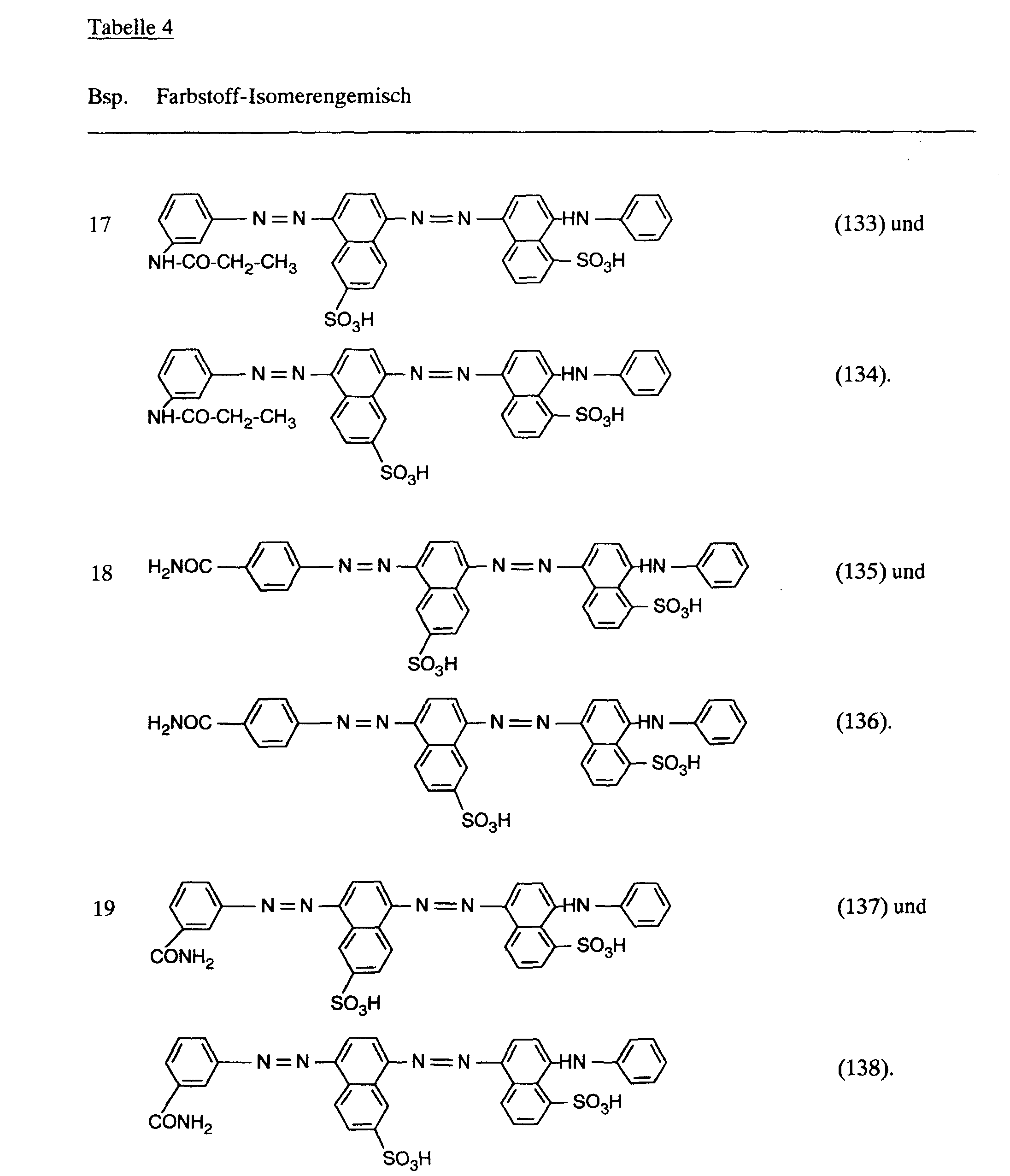

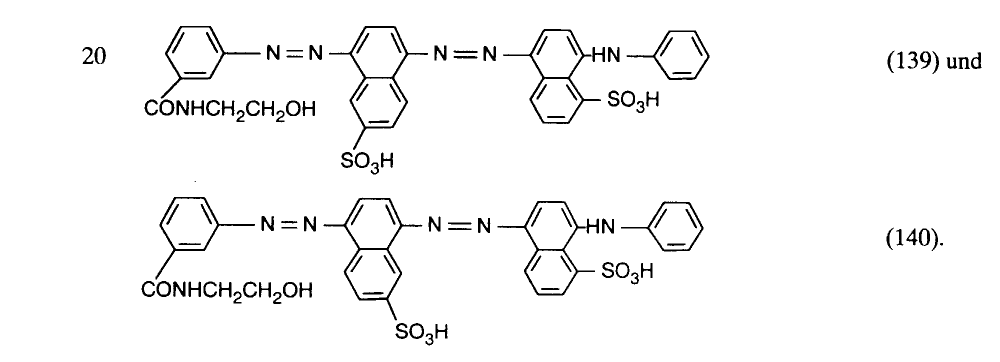

Die Farbstoffe der in Tabelle 4 angegebenen Isomerengemische können auch einzeln erhalten werden, indem man anstelle eines Isomerengemisches gemäss den Beispielen 2 bis 5 die entsprechende einzelne Verbindung verwendet.

Beispiel 21: Eine Suspension von 49,1 Teilen feuchtem Nutschgut des gemäss Beispiel 2 erhältlichen Isomerengemisches der Verbindungen der Formeln (103) und (104) in 200 Teilen Wasser wird durch Zugabe von 10-normaler Natriumhydroxidlösung auf einen pH-Wert von 12 gestellt. Nach Zugabe von 15,5 Teilen einer 4-normalen Natriumnitritlösung wird die Suspension innerhalb von 30 Minuten unter gutem Rühren zu einer Lösung von 100 Teilen Eiswasser und 50 Teilen 1-Naphthalinsulfonsäure getropft und die Lösung anschliessend zwei Stunden bei einer Temperatur von 5 bis 10° gerührt. Nun wird das überschüssige Nitrit mit Sulfaminsäure zerstört. Daraufhin wird eine separat hergestellte Lösung aus 75 Teilen Wasser, 14,9 Teilen N-Benzyl-N-ethylanilin-3'-sulfonsäure und 11,8 Teilen 5-normaler Natriumhydroxidlösung innerhalb von 30 Minuten zugegeben. Innerhalb eines Zeitraumes von einer Stunde werden gleichmässig 35 Teile Natriumacetat x 3H₂O zugegeben. Die Suspension wird 4 Stunden bei Raumtemperatur nachgerührt. Nach Eindampfen im Rotationsverdampfer erhält man 84,6 Teile eines Reaktionsproduktes, das in Form der freien Säure dem Isomerengemisch aus den Farbstoffen der Formeln 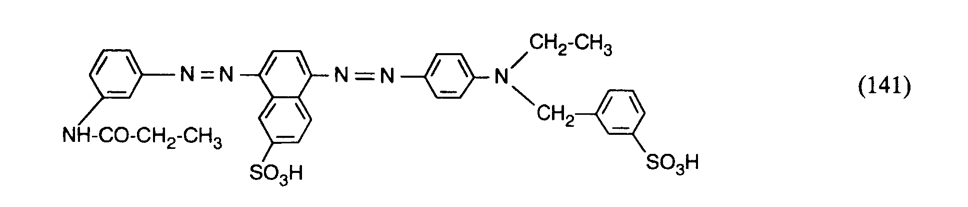 und 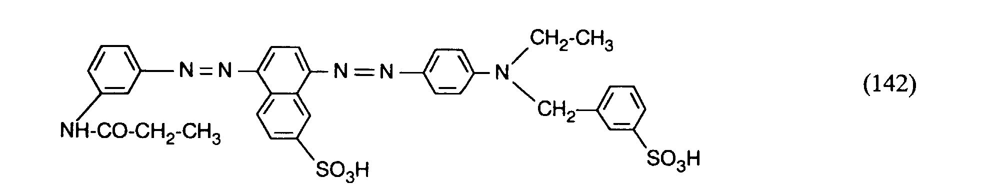 entspricht. Das Isomerengemisch der Farbstoffe der Formeln (141) und (142) färbt natürliches und synthetisches Polyamidfasermaterial in rotbraunen Farbtönen.

Die Farbstoffe der Formeln (141) und (142) können auch einzeln erhalten werden, indem man in Beispiel 21 anstelle eines Gemisches der Verbindungen der Formeln (103) und (104) die jeweilige einzelne Verbindung verwendet.

Beispiel 22: Bei Raumtemperatur werden 199,6 Teile feuchtes Nutschgut des gemäss Beispiel 1 erhältlichen Isomerengemisches der Verbindungen der Formeln (101) und (102) in 600 Teilen Wasser und 10-normaler Natriumhydroxidlösung bei einem pH-Wert von 12 verrührt. Nach Zugabe von 31 Teilen einer 4-normalen Natriumnitritlösung wird die Reaktionsmischung durch Zugabe von Eis auf eine Temperatur von ca. 1° abgekühlt. Es werden 55 Teile konzentrierter Salzsäure zugetropft und die Mischung über Nacht bei einer Temperatur von 0 bis 10° gerührt. Anschliessend wird durch Zugabe von 0,6 Teilen Sulfaminsäure überschüssiges Nitrit zerstört und der pH der Mischung mit 29 Teilen Natriumhydrogencarbonat auf einen Wert von 1,5 gestellt. Daraufhin wird eine separat hergestellte Lösung aus 50 Teilen Wasser, 9,4 Teilen Phenol und 10 Teilen konzentrierter Natriumhydroxidlösung zugegeben. Anschliessend wird der pH durch Zugabe von konzentrierter Natriumhydroxidlösung bei einem Wert von ca. 8,5 bis 9 gehalten, die Reaktionsmischung 30 Minuten bei einer Temperatur von 5 bis 10° gerührt, mit konzentrierter Natriumhydroxidlösung auf einen pH-Wert von 11 gestellt und auf 20° erwärmt. Nach Zugabe von Natriumchlorid und 52 Teilen einer wässrigen 5-normalen Salzsäurelösung wird das Reaktionsprodukt abfiltriert und getrocknet. Man erhält 53,5 Teile eines Reaktionsproduktes, das in Form der freien Säure dem Isomerengemisch aus den Farbstoffen der Formeln 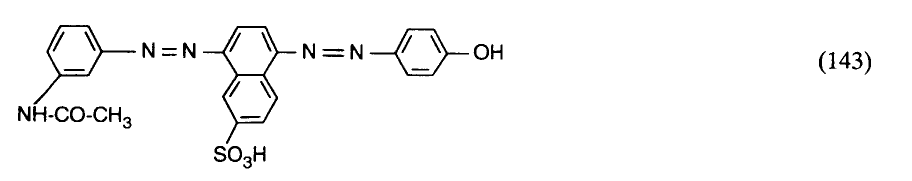 und 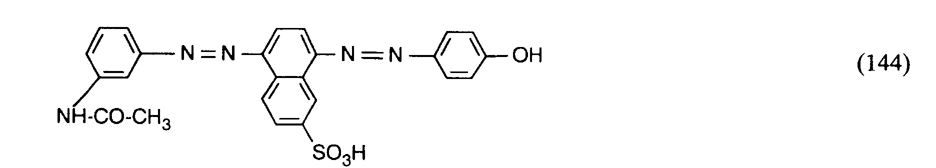 entspricht.

Die Farbstoffe der Formeln (143) und (144) können auch einzeln erhalten werden, indem man in Beispiel 22 anstelle eines Gemisches der Verbindungen der Formeln (101) und (102) die jeweilige einzelne Verbindung verwendet.

### Beispiele 23 bis 30:

Verfährt man wie in Beispiel 22 angegeben, verwendet jedoch gegebenenfalls statt 9,4 Teilen Phenol eine äquimolare Menge o-Kresol, m-Kresol oder p-Kresol und gegebenenfalls anstelle von 199,6 Teilen des Isomerengemisches der Verbindungen der Formeln (101) und (102) eine äquimolare Menge eines Isomerengemisches gemäss einem der Beispiele 2 bis 5, so erhält man die in Tabelle 5 in Form der freien Säuren angegebenen Farbstoff-Isomerengemische.

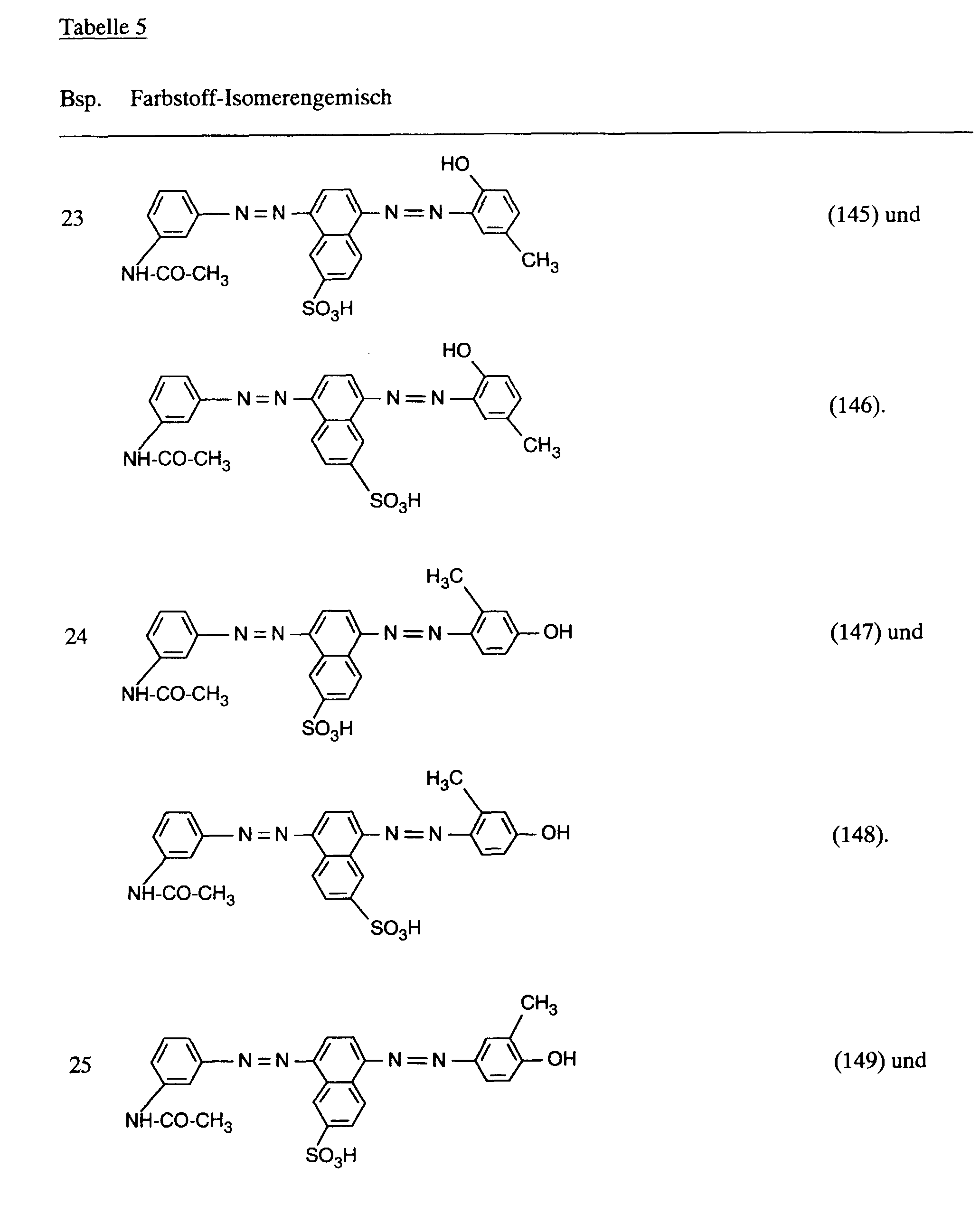

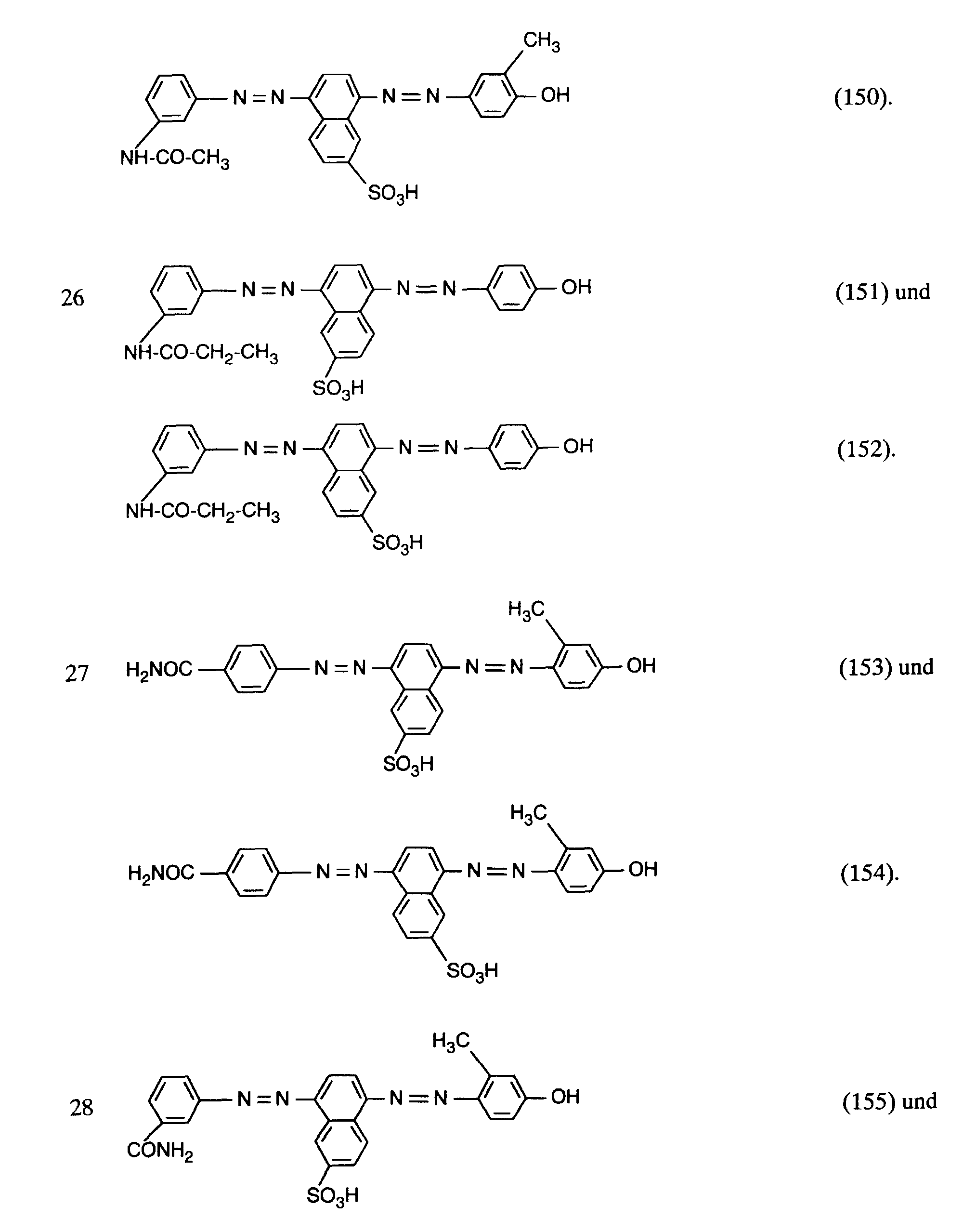

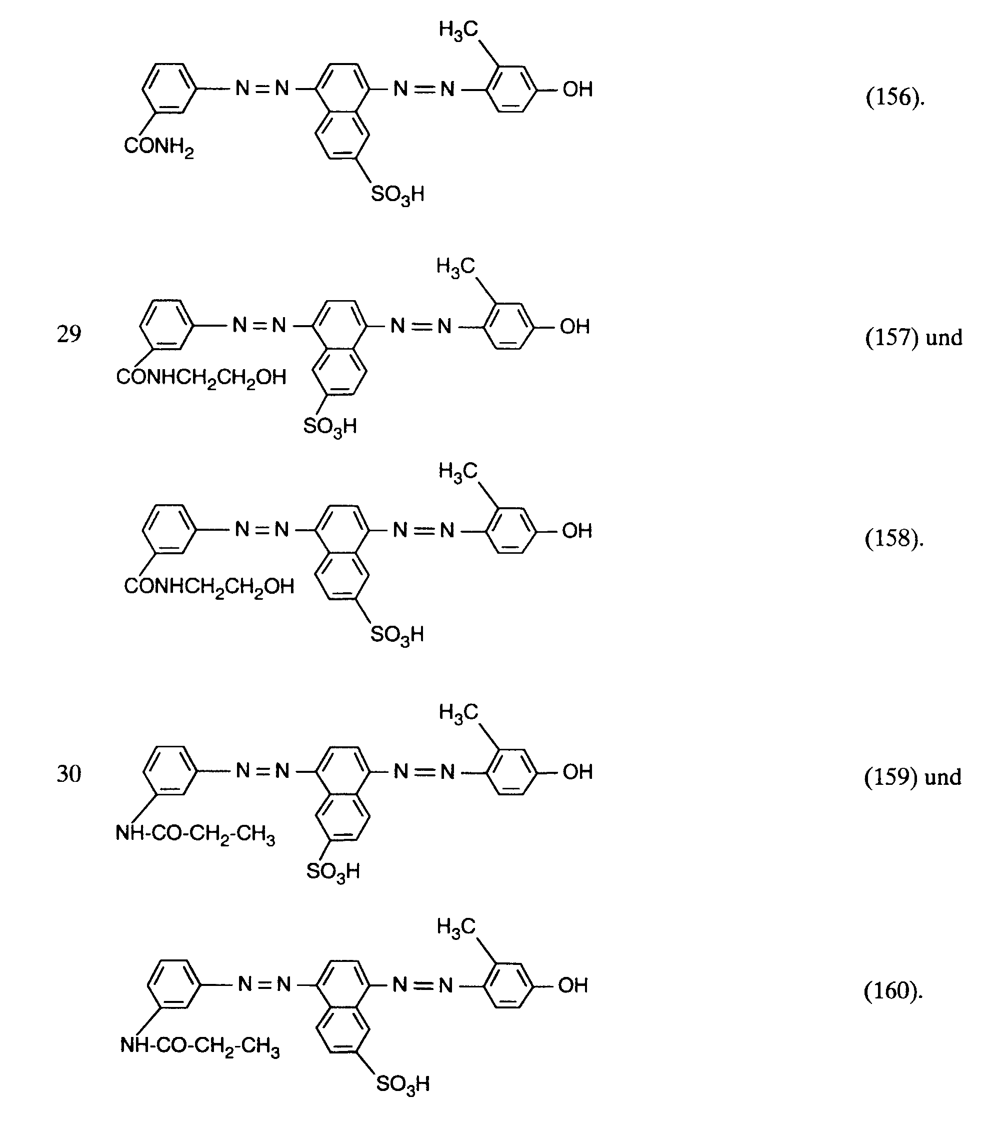

Die Farbstoffe der in Tabelle 5 angegebenen Isomerengemische können auch einzeln erhalten werden, indem man anstelle eines Isomerengemisches gemäss den Beispielen 1 bis 5 die entsprechende einzelne Verbindung verwendet.

Beispiel 31: Bei einer Temperatur von 50 bis 55° werden 5,4 Teile des gemäss Beispiel 22 erhältlichen Isomerengemisches der Verbindungen der Formeln (143) und (144) in 50 Teilen Wasser und einem Teil konzentrierter Natriumhydroxidlösung verrührt. Daraufhin wird innerhalb eines Zeitraumes von 2 bis 4 Stunden 2-Chlorethanol im Überschuss zugetropft, wobei der pH durch Zugabe von konzentrierter Natriumhydroxidlösung bei einem Wert von 11 bis 12 gehalten wird. Die Reaktionsmischung wird 4 Stunden bei einer Temperatur von 50 bis 55° nachgerührt, nach Abkühlung auf Raumtemperatur und Zugabe von Natriumchlorid wird das Reaktionsprodukt abfiltriert, mit 50 Teilen 15%-iger Natriumchloridlösung nachgewaschen und getrocknet. Man erhält 6 Teile eines Reaktionsproduktes, das in Form der freien Säure dem Isomerengemisch aus den Verbindungen der Formeln 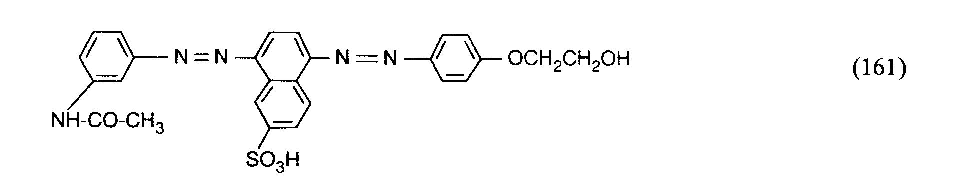 und 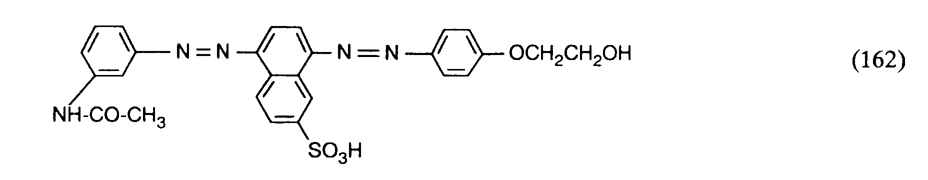 entspricht. Das Isomerengemisch der Farbstoffe der Formeln (161) und (162) färbt natürliches und synthetisches Polyamidfasermaterial in orangen Farbtönen.

Die Farbstoffe der Formeln (161) und (162) können auch einzeln erhalten werden, indem man in Beispiel 31 anstelle eines Gemisches der Verbindungen der Formeln (143) und (144) die jeweilige einzelne Verbindung verwendet.

Beispiele 32 bis 39: Verfährt man wie in Beispiel 31 angegeben, verwendet jedoch statt 5,4 Teile des gemäss Beispiel 22 erhältlichen Isomerengemisches eine äquimolare Menge eines Isomerengemisches gemäss einem der Beispiele 23 bis 30, so erhält man die in Tabelle 6 in Form der freien Säuren angegebenen Farbstoff-Isomerengemische, die natürliches und synthetisches Polyamidfasermaterial in orangen Farbtönen färben.

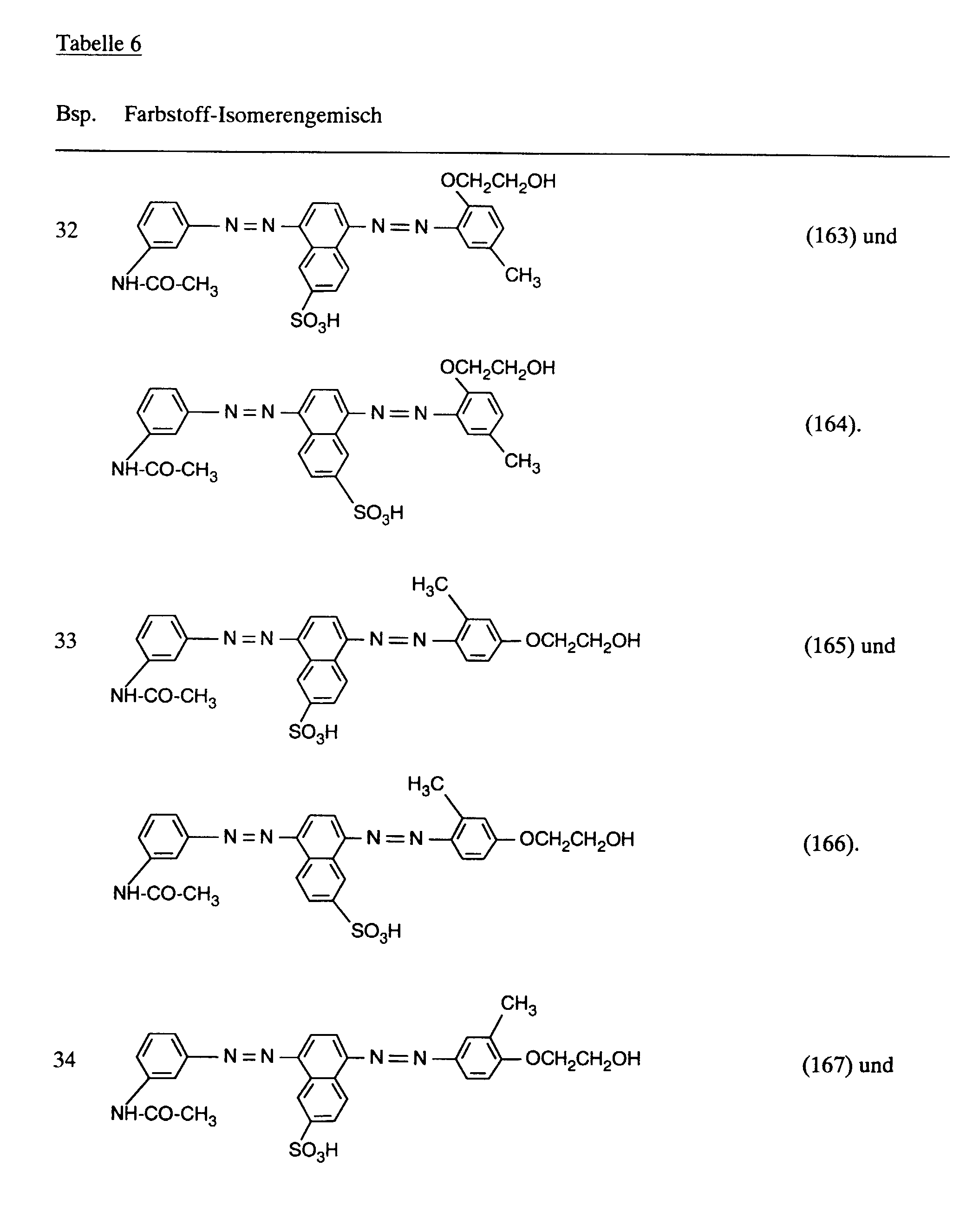

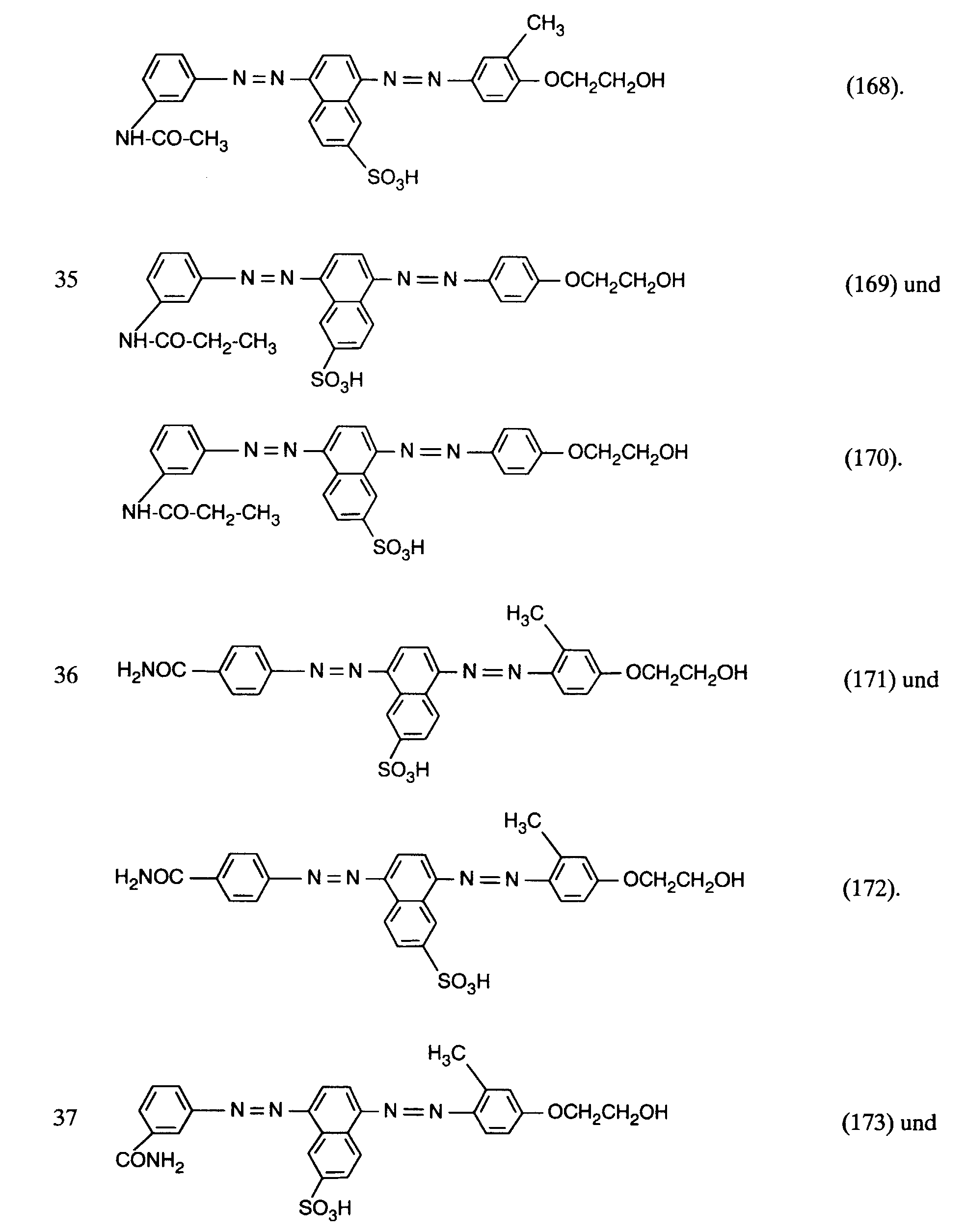

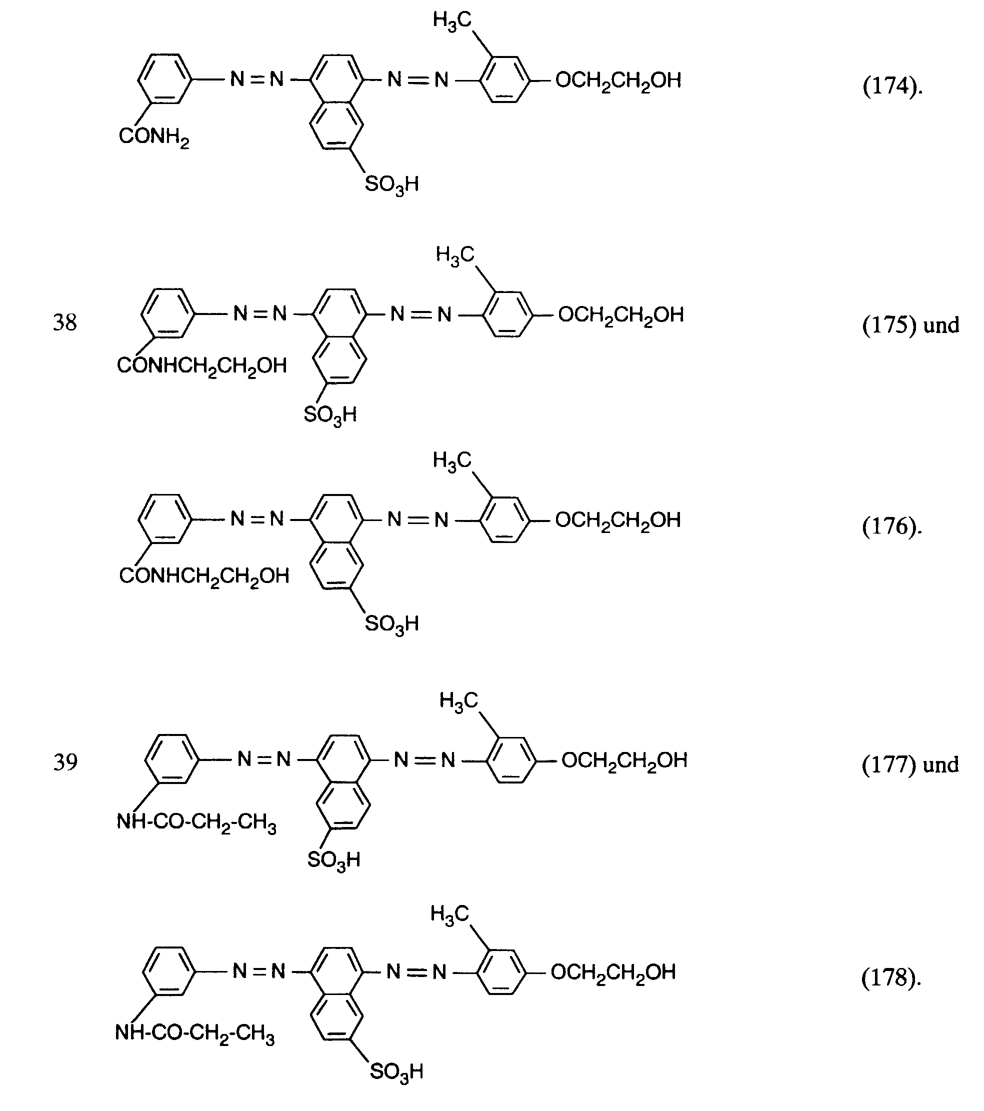

Die Farbstoffe der in Tabelle 6 angegebenen Isomerengemische können auch einzeln erhalten werden, indem man anstelle eines Isomerengemisches gemäss den Beispielen 23 bis 30 die entsprechende einzelne Verbindung verwendet.

Beispiel 40: Verfährt man wie in Beispiel 35 angegeben, verwendet jedoch statt 2-Chlorethanol Dimethylsulfat, so erhält man ein Reaktionsprodukt, das in Form der freien Säure dem Isomerengemisch aus den Farbstoffen der Formeln 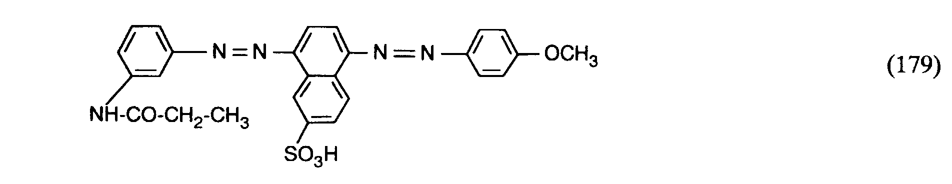 und 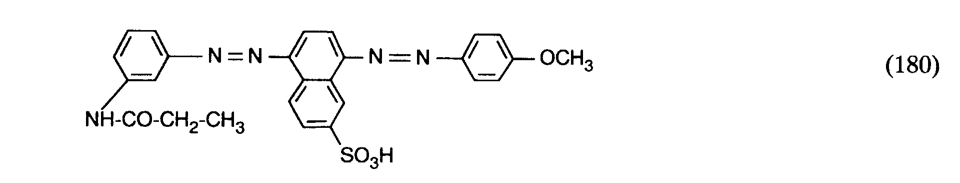 entspricht. Das Isomerengemisch der Farbstoffe der Formeln (179) und (180) färbt natürliches und synthetisches Polyamidfasermaterial in orangen Farbtönen.

Die Farbstoffe der Formeln (179) und (180) können auch einzeln erhalten werden, indem man in Beispiel 40 anstelle des Isomerengemisches der Farbstoffe der Formeln (151) und (152) den jeweiligen einzelnen Farbstoff verwendet.

Färbebeispiel 1: Man färbt 10 Teile Polyamid-6.6-Gewebe (Helancatrikot) in 500 Teilen einer wässrigen Flotte, die 2 g/l Ammonacetat enthält und mit Essigsäure auf pH 5 gestellt wird. Als Farbstoffe werden 0,64 % des gelben Farbstoffs der Formel 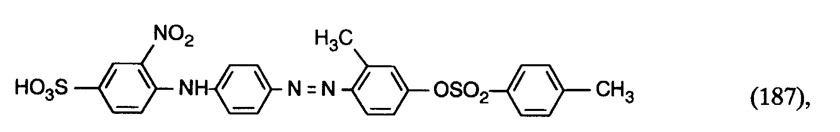 0,12 % der roten Isomerenmischung der Farbstoffe der Formeln 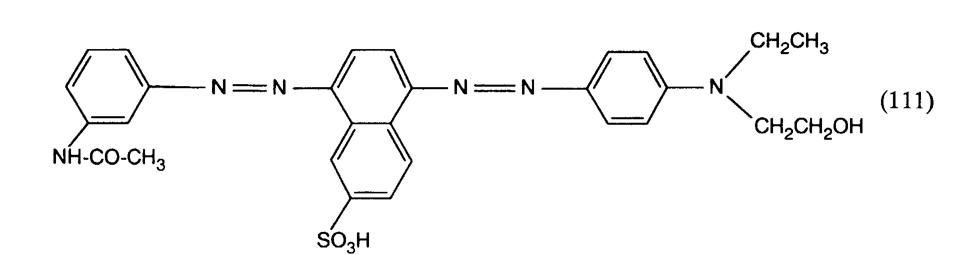 und 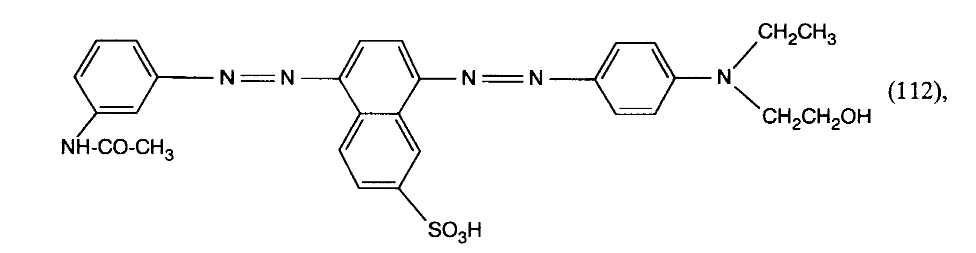 und 0,05% der blauen Isomerenmischung der Farbstoffe der Formeln 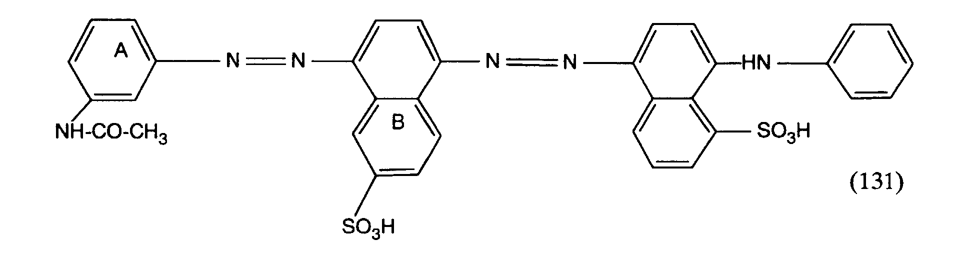 und 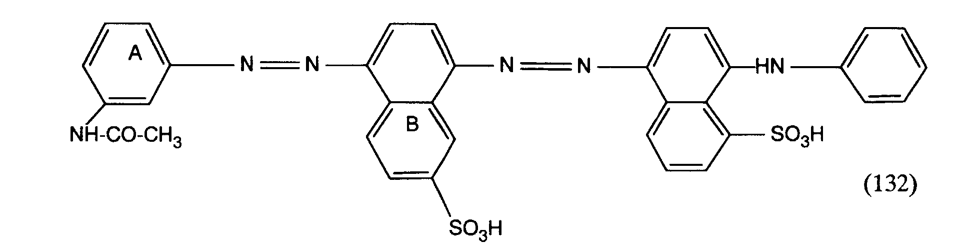 verwendet, wobei sich die Mengenangaben auf das Fasergewicht beziehen. Die Färbedauer bei einer Temperatur von 60 bis 98° beträgt 30 bis 90 Minuten. Das gefärbte Helancastück wird anschliessend herausgenommen und wie üblich gespült und getrocknet. Man erhält ein in brauner Nuance völlig egal gefärbtes Gewebestück, das gute Allgemeinechtheiten aufweist.

Färbebeispiele 2 bis 13: Verfährt man wie in Färbebeispiel 1 angegeben, verwendet jedoch anstelle von 0,64% des gelben Farbstoffs der Formel (187) und 0,12% der roten Isomerenmischung der Farbstoffe der Formeln (111) und (112) und 0,05% der blauen Isomerenmischung der Farbstoffe der Formeln (131) und (132) die in der folgenden Tabelle 7 in Spalte 2 angegebenen Farbstoffe bzw. Farbstoff-Isomerenmischungen, so erhält man die in dem in Spalte 3 angegebenen Farbton völlig egal gefärbten Gewebestücke.

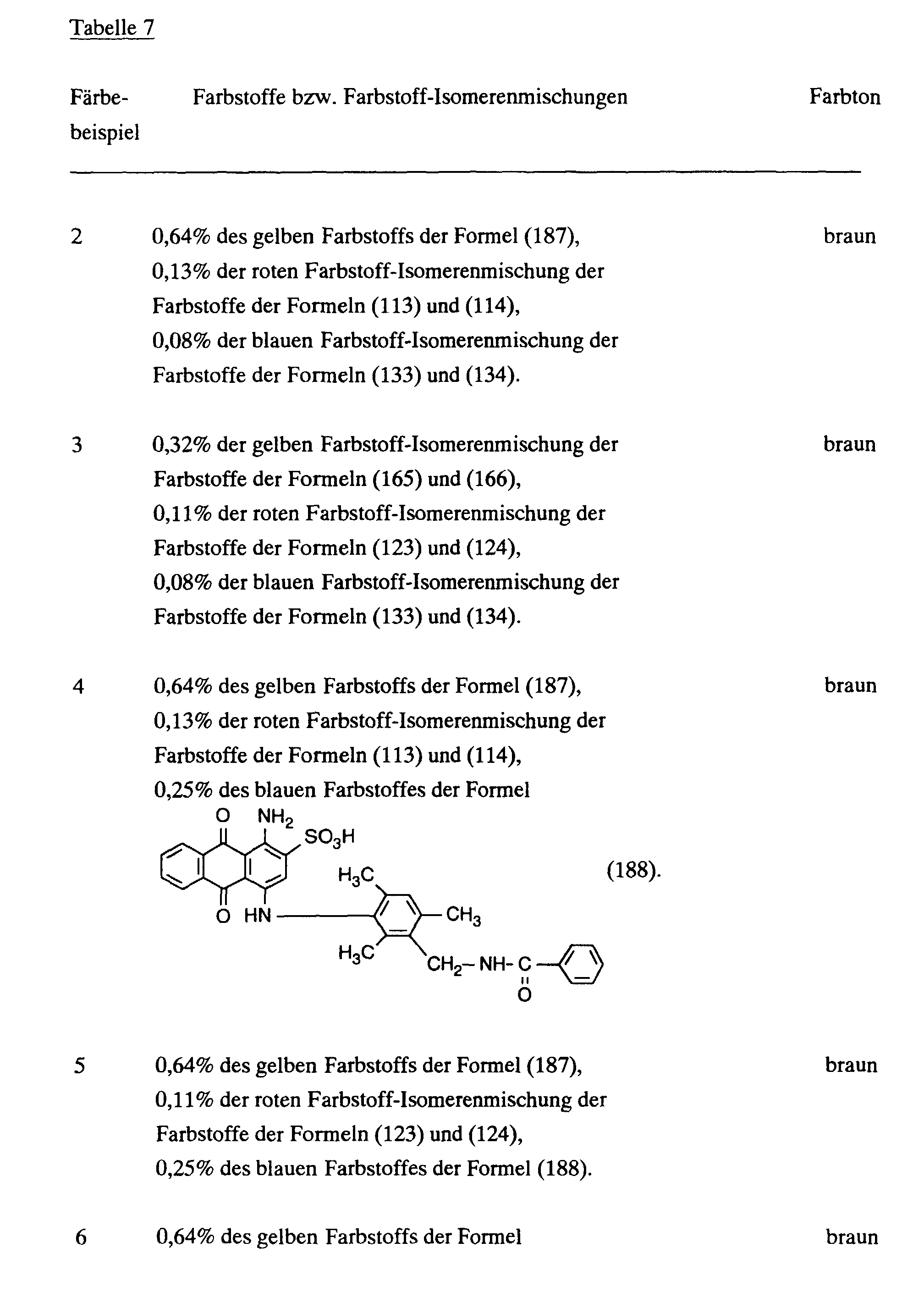

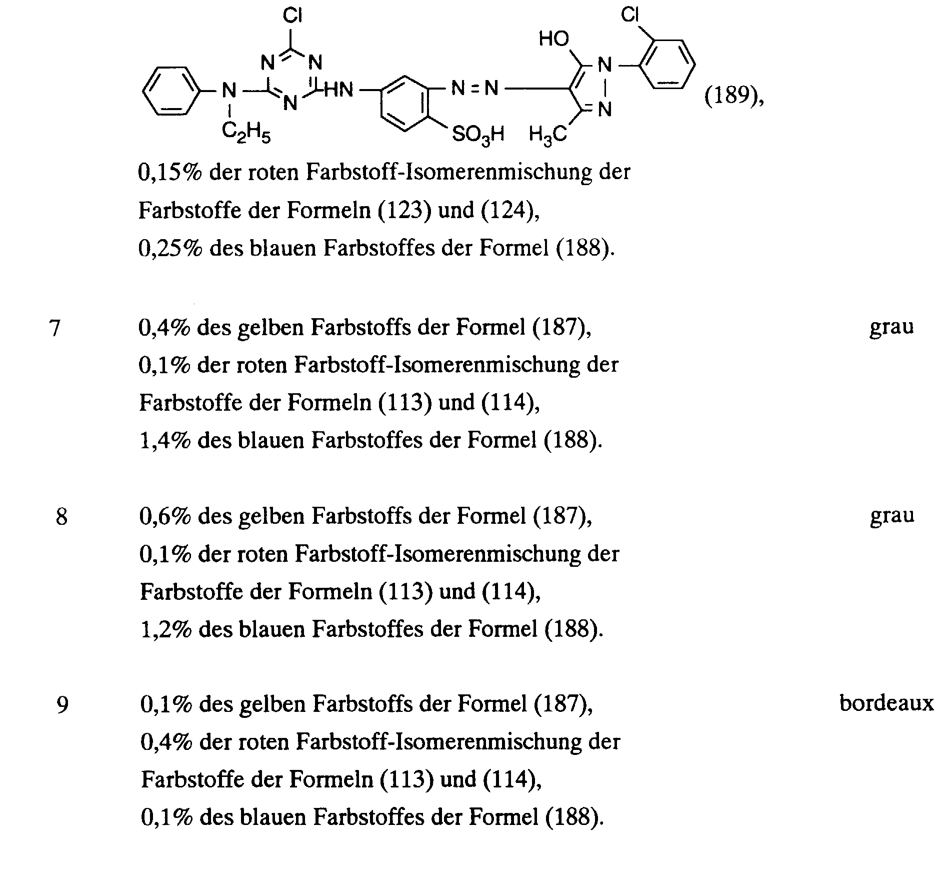

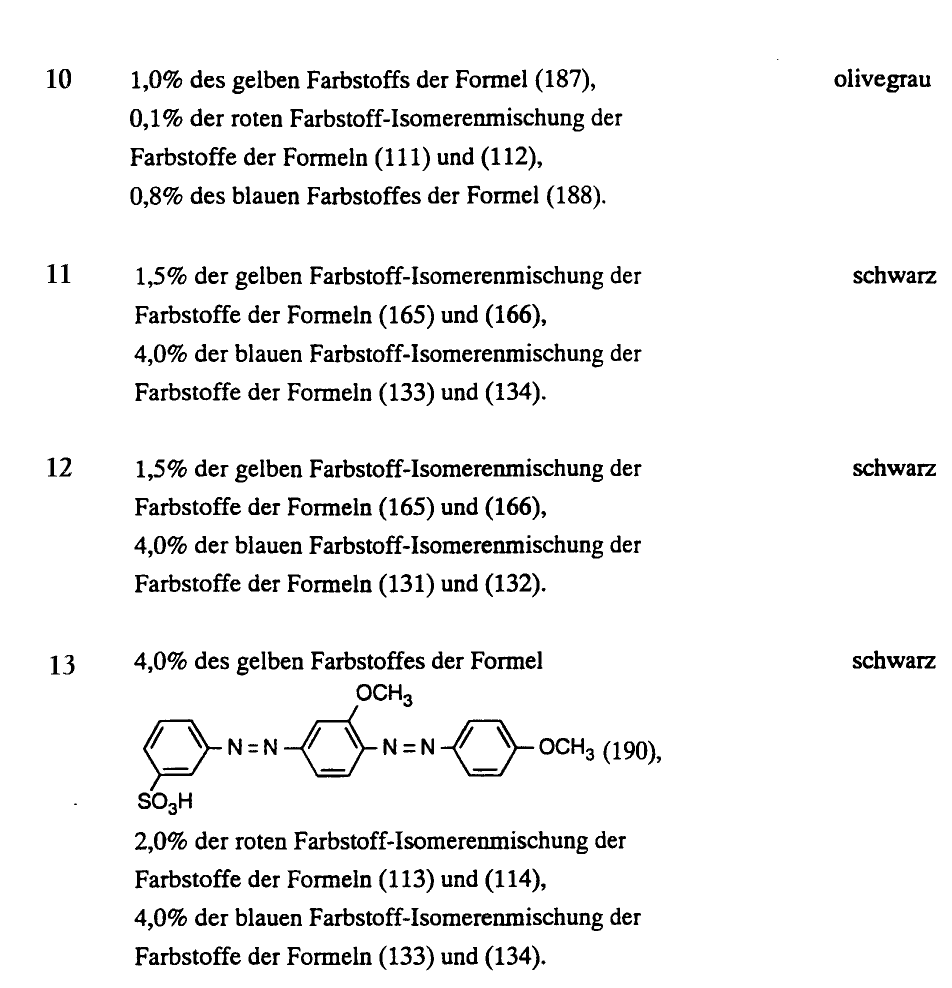

Färbebeispiel 14: Man färbt 10 Teile Polyamid-6,6-Gewebe in 500 Teilen einer wässrigen Flotte, die 1 g/l Mononatriumphosphat enthält und mit Dinatriumphosphat auf pH 6 gestellt wird. Der Anteil des Isomerengemisches der Farbstoffe gemäss Beispiel 17 beträgt 1 %, bezogen auf das Fasergewicht. Die Färbedauer bei einer Temperatur von 98° beträgt 30 bis 90 Minuten. Das gefärbte Polyamid-6,6-Gewebe wird anschliessend herausgenommen und wie üblich gewaschen und getrocknet.

Man erhält ein blau gefärbtes Polyamid-6,6-Gewebe, das eine reine Nuance und gute Gesamtechtheiten aufweist.

## Patentansprüche (Patentansprüche für folgende(n) Vertragsstaat(en): BE, CH, DE, FR, GB, IT, LI)

1. Azofarbstoffe der Formel 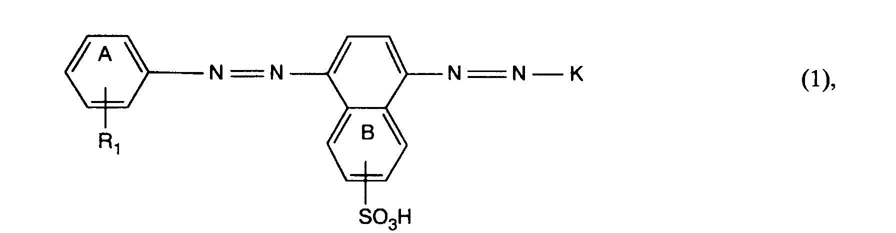 worin
R₁ einen Rest der Formel -NH-CO-R₂,
R₂ gegebenenfalls durch Halogen, Hydroxy oder C₁-C₄-Alkoxy substituiertes C₁-C₄-Alkyl,
K einen Rest der Formel 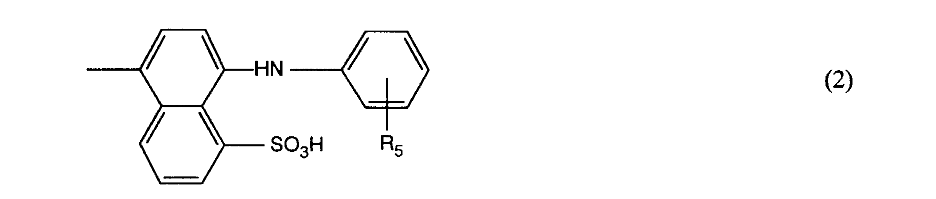 und R₅ Wasserstoff oder C₁-C₄-Alkyl bedeutet, und
R₁ an den Benzolring A in 3-Stellung, relativ zur Azogruppe, gebunden ist.

2. Azofarbstoffe gemäss Anspruch 1, worin
R₂ C₂-C₄-Alkyl, insbesondere Aethyl, ist.

3. Azofarbstoffe gemäss einem der Ansprüche 1 und 2, worin
R₅ Wasserstoff oder Methyl, insbesondere Wasserstoff, ist.

4. Azofarbstoffe gemäss Anspruch 1, der Formel

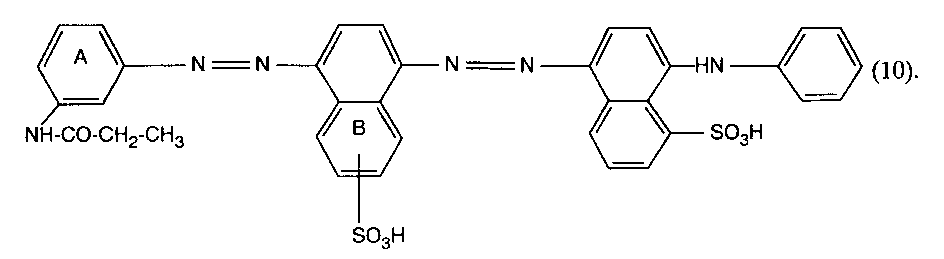

5. Verfahren zur Herstellung von Azofarbstoffen gemäss Anspruch 1, dadurch gekennzeichnet, dass man ein Amin der Formel 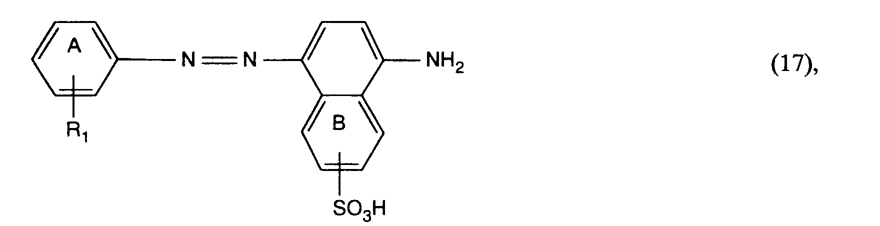 worin R₁ die in Anspruch 1 angegebenen Bedeutungen hat, diazotiert und auf eine Kupplungskomponente der Formel 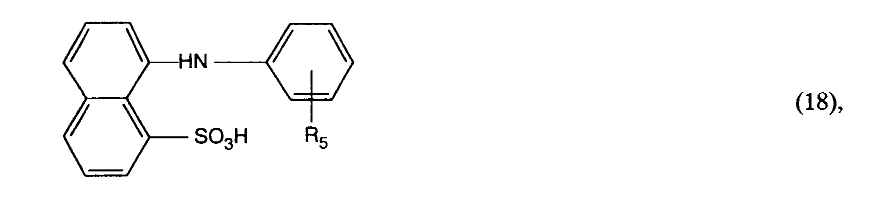 worin R₅ die in Anspruch 1 angegebenen Bedeutungen hat, kuppelt.

6. Farbstoffmischungen, dadurch gekennzeichnet, dass sie mindestens zwei Farbstoffe der Formel (1) gemäss Anspruch 1 enthalten.

7. Verwendung der Azofarbstoffe gemäss den Ansprüchen 1 bis 4 bzw. der
Farbstoffmischungen gemäss Anspruch 6 zum Färben und Bedrucken von stickstoffhaltigen oder hydroxygruppenhaltigen Fasermaterialien.

8. Verfahren zum Trichromie-Färben oder -Bedrucken von natürlichen oder synthetischen Polyamidfasermaterialien, dadurch gekennzeichnet, dass man mindestens einen rotfärbenden Farbstoff der Formel 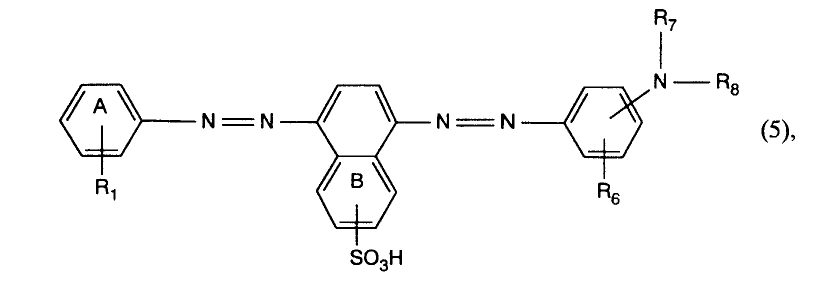 worin R₁ ein Rest der Formel -NH-CO-R₂ oder -CO-N(R₃)R₄ ist, R₂ Amino oder gegebenenfalls durch Halogen, Hydroxy oder C₁-C₄-Alkoxy substituiertes C₁-C₄-Alkyl ist, R₃ und R₄ unabhängig voneinander Wasserstoff, C₁-C₄-Alkyl oder
C₂-C₄-Hydroxyalkyl bedeuten, R₆ Wasserstoff oder C₁-C₄-Alkyl und R₇ und R₈ unabhängig voneinander gegebenenfalls durch Hydroxy oder durch gegebenenfalls weitersubstituiertes Phenyl substituiertes C₁-C₄-Alkyl sind, zusammen mit mindestens einem gelb- oder orangefärbenden Farbstoff und mindestens einem blaufärbenden Farbstoff verwendet.

## Patentansprüche (Patentansprüche für folgende(n) Vertragsstaat(en): ES)

1. Verfahren zur Herstellung von Azofarbstoffen der Formel 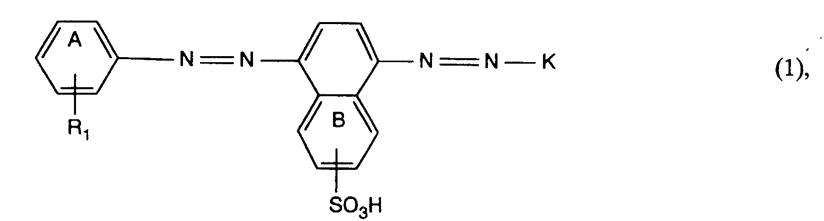 worin
R₁ einen Rest der Formel -NH-CO-R₂,
R₂ gegebenenfalls durch Halogen, Hydroxy oder C₁-C₄-Alkoxy substituiertes C₁-C₄-Alkyl,
K einen Rest der Formel 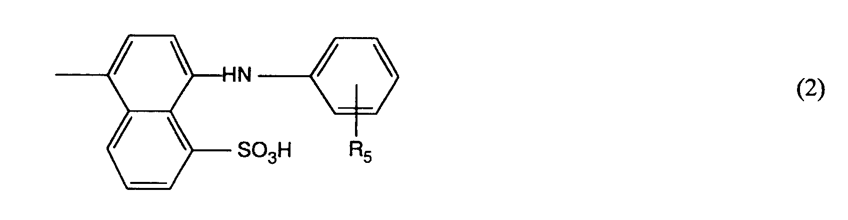 und R₅ Wasserstoff oder C₁-C₄-Alkyl bedeutet, und
R₁ an den Benzolring A in 3-Stellung, relativ zur Azogruppe, gebunden ist, dadurch gekennzeichnet, dass man ein Amin der Formel 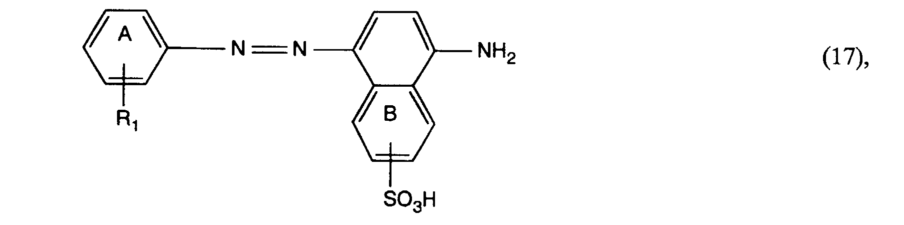 worin R₁ die oben angegebenen Bedeutungen hat, diazotiert und auf eine Kupplungskomponente der Formel 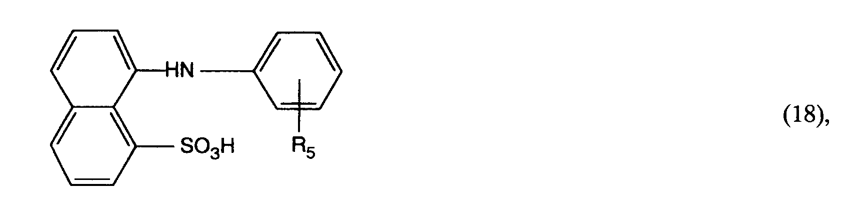 worin R₅ die oben angegebenen Bedeutungen hat, kuppelt.

2. Verfahren gemäss Anspruch 1, dadurch gekennzeichnet, dass
R₂ C₂-C₄-Alkyl, insbesondere Aethyl, ist.

3. Verfahren gemäss einem der Ansprüche 1 und 2, dadurch gekennzeichnet, dass R₅ Wasserstoff oder Methyl, insbesondere Wasserstoff, ist.

4. Verfahren gemäss Anspruch 1 zur Herstellung von Azofarbstoffen der Formel

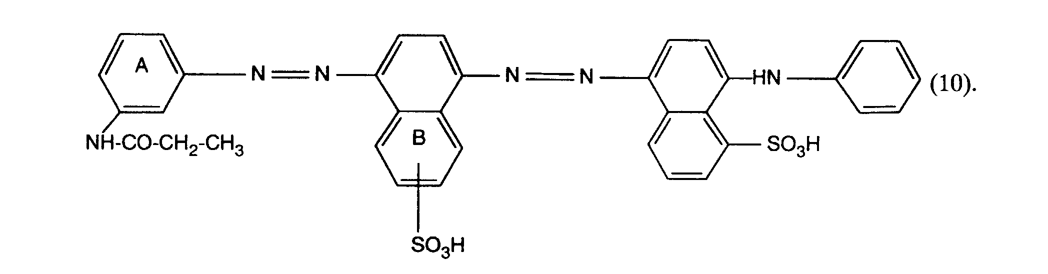

5. Verfahren zur Herstellung von Farbstoffmischungen, dadurch gekennzeichnet, dass man mindestens zwei Farbstoffe der Formel (1) gemäss Anspruch 1 mischt.

6. Verwendung der gemäss den Ansprüchen 1 bis 4 erhaltenen Azofarbstoffe bzw. der gemäss Anspruch 5 erhaltenen Farbstoffmischungen zum Färben und Bedrucken von stickstoffhaltigen oder hydroxygruppenhaltigen Fasermaterialien.

7. Verfahren zum Trichromie-Färben oder -Bedrucken von natürlichen oder synthetischen Polyamidfasermaterialien, dadurch gekennzeichnet, dass man mindestens einen rotfärbenden Farbstoff der Formel 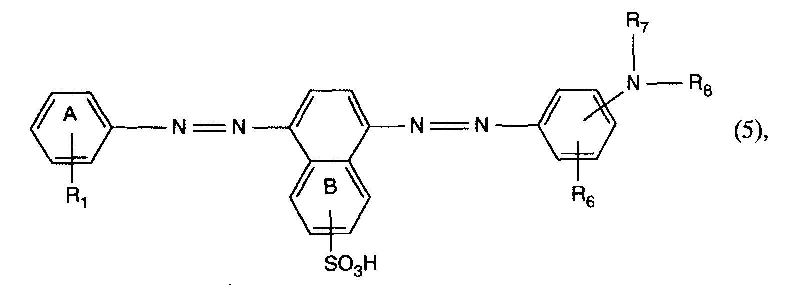 worin R₁ ein Rest der Formel -NH-CO-R₂ oder -CO-N(R₃)R₄ ist, R₂ Amino oder gegebenenfalls durch Halogen, Hydroxy oder C₁-C₄-Alkoxy substituiertes C₁-C₄-Alkyl ist, R₃ und R₄ unabhängig voneinander Wasserstoff, C₁-C₄-Alkyl oder
C₂-C₄-Hydroxyalkyl bedeuten, R₆ Wasserstoff oder C₁-C₄-Alkyl und R₇ und R₈ unabhängig voneinander gegebenenfalls durch Hydroxy oder durch gegebenenfalls weitersubstituiertes Phenyl substituiertes C₁-C₄-Alkyl sind, zusammen mit mindestens einem gelb- oder orangefärbenden Farbstoff und mindestens einem blaufärbenden Farbstoff verwendet.

## Claims (Claims for the following Contracting State(s): BE, CH, DE, FR, GB, IT, LI)

1. An azo dye of the formula 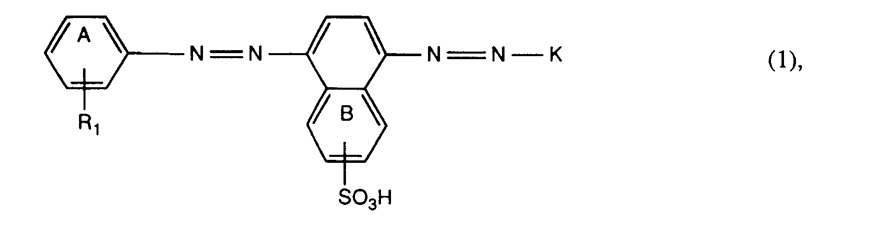 in which
R₁ is a radical of the formula -NH-CO-R₂
R₂ is unsubstituted or halogen-, hydroxyl- or C₁-C₄alkoxy-substituted C₁-C₄alkyl,
K is a radical of the formula 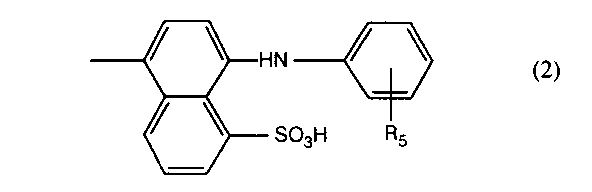 and R₅ is hydrogen or C₁-C₄alkyl, and
R₁ is attached to the benzene ring A in the 3 position, relative to the azo group.

2. An azo dye according to claim 1, in which R₂ is C₂-C₄alkyl, in particular ethyl.

3. An azo dye according to either of claims 1 and 2, in which R₅ is hydrogen or methyl, in particular hydrogen.

4. An azo dye according to claim 1 of the formula

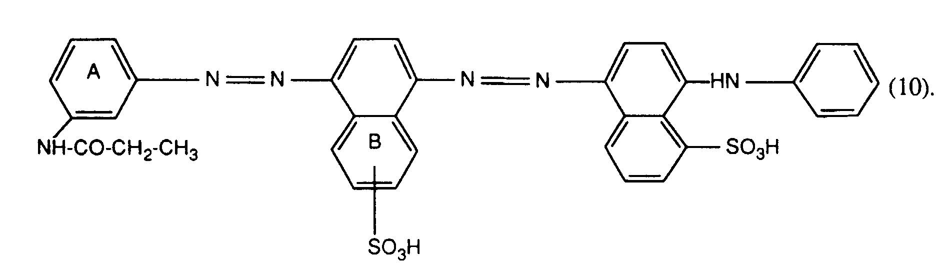

5. A process for the preparation of an azo dye according to claim 1, characterized in that it comprises diazotising an amine of the formula 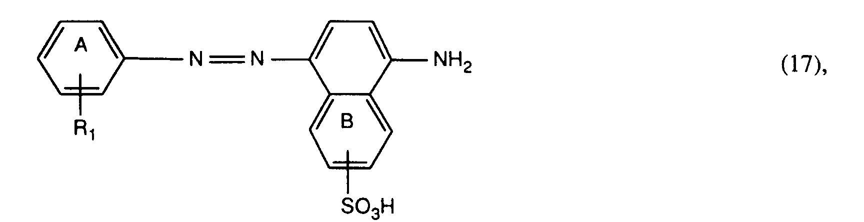 in which R₁ is as defined in claim 1 and coupling the product onto a coupling component of the formula 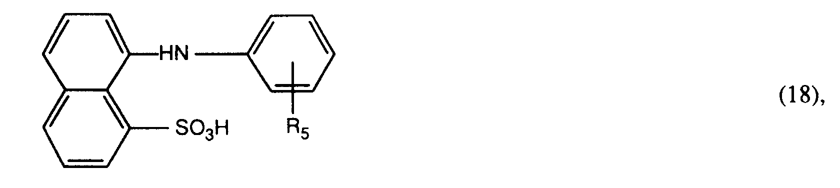 in which R₅ is as defined in claim 1.

6. A dye mixture comprising at least two dyes of the formula (1) according to claim 1.

7. Use of the azo dye according to claims 1 to 4 or of the dye mixture according to claim 6 for the dyeing and printing of nitrogen-containing or hydroxyl-containing fibre materials.

8. A process for the trichromatic dyeing or printing of natural or synthetic polyamide fibre materials, characterized in that at least one red-dyeing dye of the formula 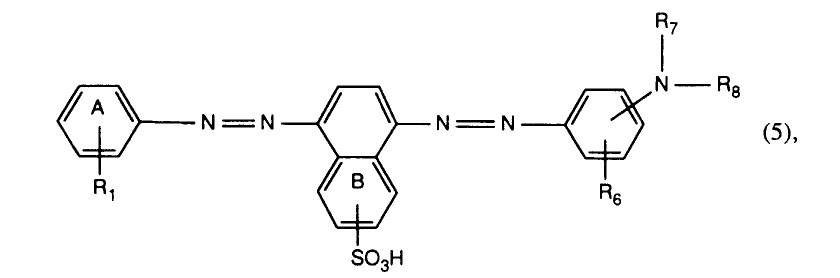 in which R₁ is a radical of the formula -NH-CO-R₂ or -CO-N(R₃)R₄, R₂ is amino or unsubstituted or halogen-, hydroxyl- or C₁-C₄alkoxy-substituted C₁-C₄alkyl, R₃ and R₄, independently of one another, are hydrogen, C₁-C₄alkyl or C₂-C₄hydroxyalkyl, R₆ is hydrogen or C₁-C₄alkyl and R₇ and R₈, independently of one another, are C₁-C₄alkyl which is unsubstituted or substituted by hydroxyl or by phenyl which may be further substituted, is used together with at least one yellow- or orange-dyeing dye and at least one blue-dyeing dye.

## Claims (Claims for the following Contracting State(s): ES)

1. A process for the preparation of an azo dye of the formula 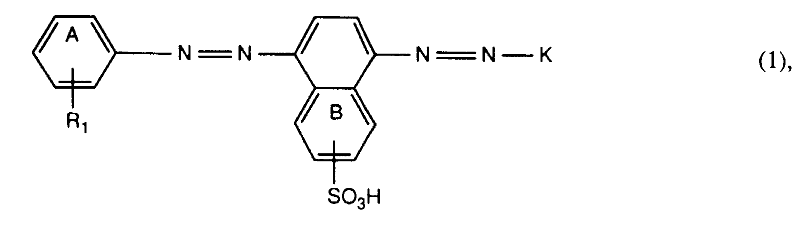 in which
R₁ is a radical of the formula -NH-CO-R₂
R₂ is unsubstituted or halogen-, hydroxyl- or C₁-C₄alkoxy-substituted C₁-C₄alkyl,
K is a radical of the formula 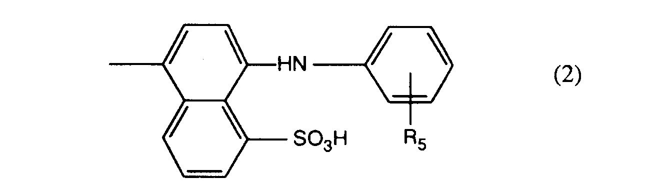 and R₅ is hydrogen or C₁-C₄alkyl, and
R₁ is attached to the benzene ring A in the 3 position, relative to the azo group, characterized in that it comprises diazotising an amine of the formula 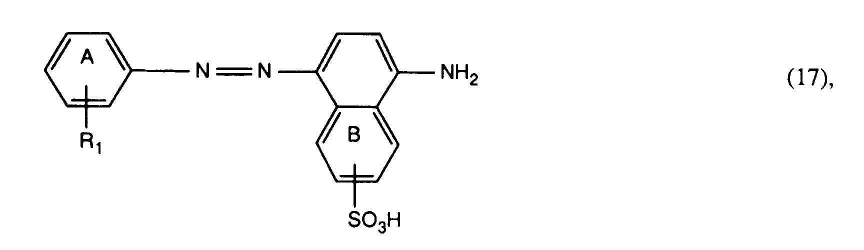 in which R₁ is as defined above and coupling the product onto a coupling component of the formula 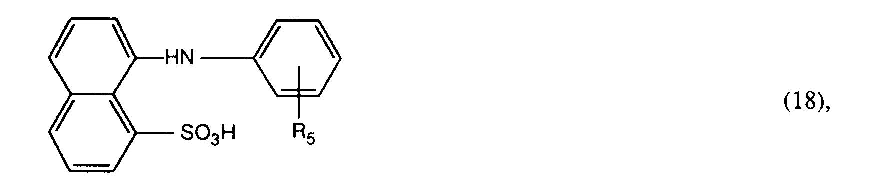 in which R₅ is as defined above.

2. A process according to claim 1, characterized in that R₂ is C₂-C₄alkyl, in particular ethyl.

3. A process according to either of claims 1 and 2, characterized in that R₅ is hydrogen or methyl, in particular hydrogen.

4. A process according to claim 1 for the preparation of an azo dye of the formula

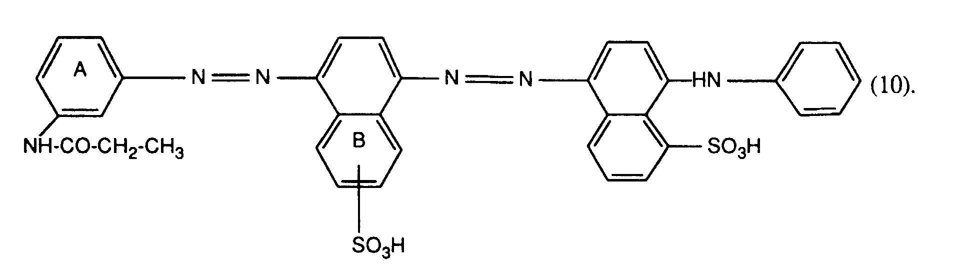

5. A process for the preparation of a dye mixture, characterized in that it comprises mixing at least two dyes of the formula (1) according to claim 1.

6. Use of the azo dye obtained according to claims 1 to 4 or of the dye mixture obtained according to claim 5 for the dyeing and printing of nitrogen-containing or hydroxyl-containing fibre materials.

7. A process for the trichromatic dyeing or printing of natural or synthetic polyamide fibre materials, characterized in that at least one red-dyeing dye of the formula 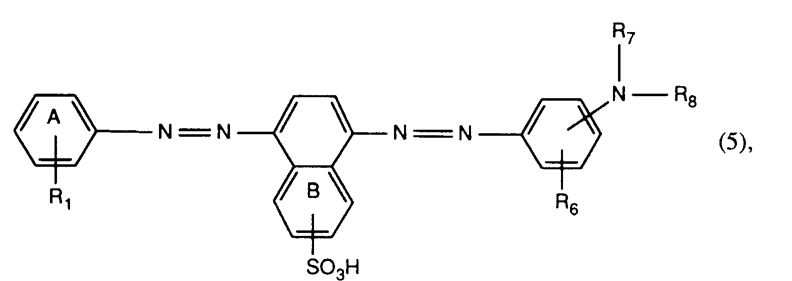 in which R₁ is a radical of the formula -NH-CO-R₂ or -CO-N(R₃)R₄, R₂ is amino or unsubstituted or halogen-, hydroxyl- or C₁-C₄alkoxy-substituted C₁-C₄alkyl, R₃ and R₄, independently of one another, are hydrogen, C₁-C₄alkyl or C₂-C₄hydroxyalkyl, R₆ is hydrogen or C₁-C₄alkyl and R₇ and R₈, independently of one another, are C₁-C₄alkyl which is unsubstituted or substituted by hydroxyl or by phenyl which may be further substituted, is used together with at least one yellow- or orange-dyeing dye and at least one blue-dyeing dye.

## Revendications (Revendications pour l'(les) Etat(s) contractant(s) suivant(s): BE, CH, DE, FR, GB, IT, LI)

1. Colorants azoïques de formule 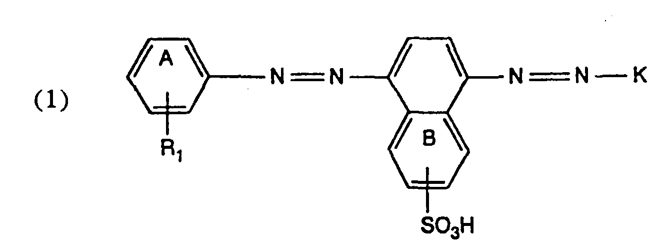 dans laquelle
R₁ représente un résidu de formule -NH-CO-R₂,
R₂ représente un groupe alkyle en C₁₋₄, éventuellement substitué par des résidus halogéno, hydroxy ou alcoxy en C₁₋₄,
K représente un résidu de formule 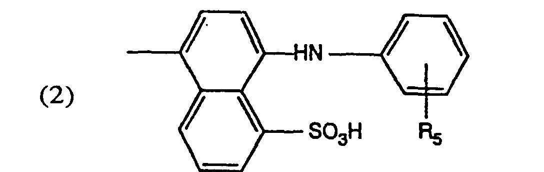 et
R₅ est un atome d'hydrogène ou un groupe alkyle en C₁₋₄, et
R₁ est lié au noyau benzène A en position 3 par rapport au groupe azo.

2. Colorants azoïques selon la revendication 1 dans lesquels R₂ représente un groupe alkyle en C₂₋₄, en particulier un groupe éthyle.

3. Colorants azoïques selon une des revendications 1 et 2, dans lesquels R₅ représente un atome d'hydrogène ou un groupe méthyle, en particulier un atome d'hydrogène.

4. Colorants azoïques selon la revendication 1 de formule

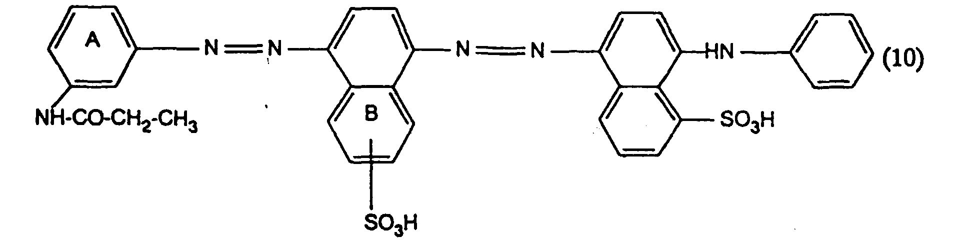

5. Procédé de préparation de colorants azoïques selon la revendication 1, caractérisé en ce que l'on réalise la diazotation d'une amine de formule 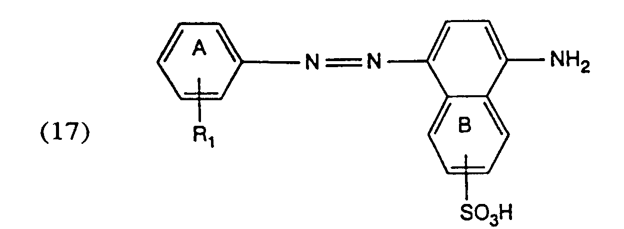 dans laquelle R₁ a la signification indiquée dans la revendication 1, et que l'on copule l'amine diazotée avec un copulant de formule 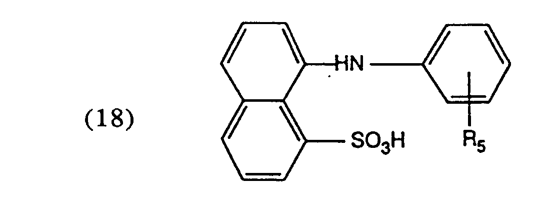 dans laquelle R₅ a la signification indiquée dans la revendication 1.

6. Mélanges de colorants caractérisés en ce qu'ils contiennent au moins deux colorants de formule (1) selon la revendication 1.

7. Utilisation des colorants azoïques selon les revendications 1 à 4 ou des mélanges de colorants selon la revendication 6 pour la teinture ou l'impression de matériaux fibreux contenant des atomes d'azote ou des groupes hydroxyle.

8. Procédé de teinture ou d'impression en trichromie de matériaux fibreux en polyamide naturel ou synthétique, caractérisé en ce que l'on utilise au moins un colorant rouge de formule

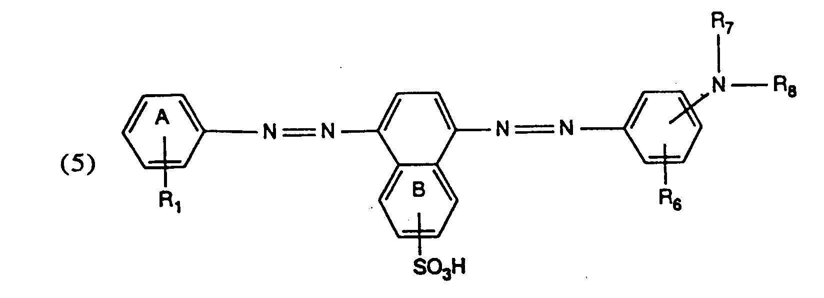

## Revendications (Revendications pour l'(les) Etat(s) contractant(s) suivant(s): ES)

1. Procédé de préparation de colorants azoïques de formule 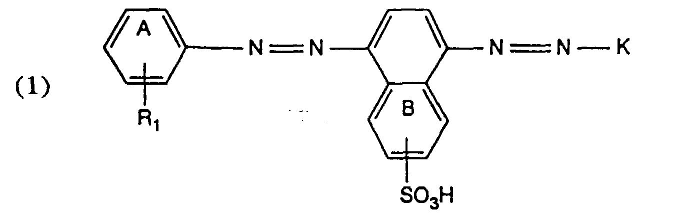 dans laquelle
R₁ représente un résidu de formule -NH-CO-R₂,
R₂ représente un groupe alkyle en C₁₋₄, éventuellement substitué par des résidus halogéno, hydroxy ou alcoxy en C₁₋₄,
K représente un résidu de formule 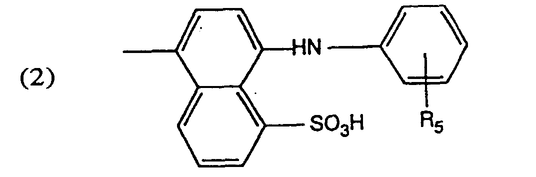 et
R₅ est un atome d'hydrogène ou un groupe alkyle en C₁₋₄, et
R₁ est lié au noyau benzène A en position 3 par rapport au groupe azo,
caractérisé en ce que l'on réalise la diazotation d'une amine de formule 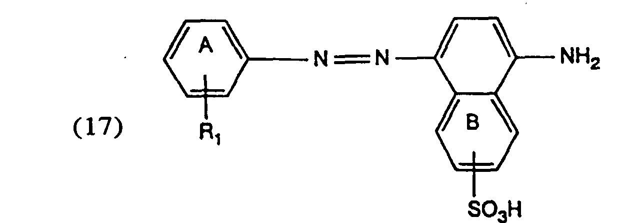 dans laquelle R₁ a la signification indiquée ci-dessus, et que l'on copule l'amine diazotée avec un copulant de formule 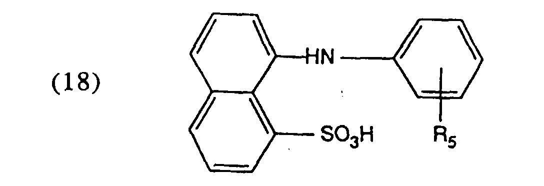 dans laquelle R₅ a la signification indiquée ci-dessus.

2. Procédé selon la revendication 1 caractérisé en ce que R₂ représente un groupe alkyle en C₂₋₄, en particulier un groupe éthyle.

3. Procédé selon une des revendications 1 et 2, caractérisé en ce que R₅ représente un atome d'hydrogène ou un groupe méthyle, en particulier un atome d'hydrogène.

4. Procédé selon la revendication 1 pour la préparation de colorants azoïques de formule

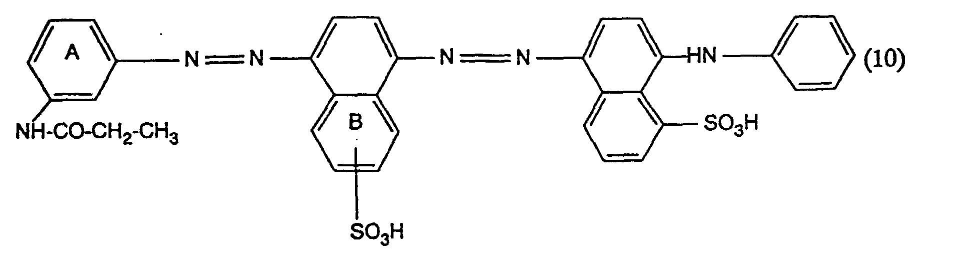

5. Procédé de préparation de mélanges de colorants, caractérisé en ce que l'on mélange au moins deux colorants de formule (1) selon la revendication 1.

6. Utilisation des colorants azoïques obtenus selon les revendications 1 à 4 ou des mélanges de colorants obtenus selon la revendication 5 pour la teinture ou l'impression de matériaux fibreux contenant des atomes d'azote ou des groupes hydroxyle.

7. Procédé de teinture ou d'impression en trichromie de matériaux fibreux en polyamide naturel ou synthétique, caractérisé en ce que l'on utilise au moins un colorant rouge de formule 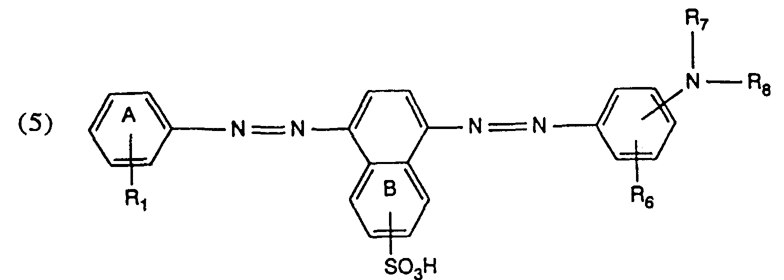 dans laquelle
R₁ est un résidu de formule -NH-CO-R₂ ou -CO-N(R₃)R₄,
R₂ est un groupe amino ou un groupe alkyle en C₁₋₄ portant éventuellement un substituant halogéno, hydroxy ou alcoxy en C₁₋₄,
R₃ et R₄ représentent, indépendamment l'un de l'autre, un atome d'hydrogène, un groupe alkyle en C₁₋₄ ou hydroxyalkyle en C₂₋₄,
R₆ représente un atome d'hydrogène ou un groupe alkyle en C₁₋₄, et
R₇ et R₈ représentent, indépendamment l'un de l'autre, un groupe alkyle en C₁₋₄ portant éventuellement un substituant hydroxyle ou phényle, ce dernier étant éventuellement substitué à son tour,
en combinaison avec au moins un colorant jaune ou orange et au moins un colorant bleu.
